# FASCICULE DE BREVET EUROPEEN

(11) **EP 4 187 427 B1**
(45) Date de publication et mention de la délivrance du brevet: **19.08.2026**
(21) Numéro de dépôt: 22209224.9
(22) Date de dépôt: 23.11.2022
(51) Int. Cl.: G06F 21/84, H04L 9/40, G06F 21/60, H04N 21/258, H04N 21/2343, H04N 21/6377, G06F 3/14, G09G 3/36, G09G 3/20, G09G 3/3208, G09G 5/04, H04N 21/426, H04N 21/431, H04N 21/4363, H04N 21/4408

(54) **DISPOSITIF D'AFFICHAGE À DÉCHIFFREMENT LOCAL DES DONNÉES NUMÉRIQUES**
ANZEIGEVORRICHTUNG MIT LOKALER ENTSCHLÜSSELUNG DIGITALER DATEN
DISPLAY DEVICE WITH LOCAL DECRYPTION OF DIGITAL DATA

(30) Priorité: 29.11.2021 FR 2112666
(43) Date de publication de la demande: 31.05.2023
(73) Titulaire: Commissariat à l'Energie Atomique et aux Energies Alternatives, 75015 Paris (FR)
(72) Inventeur: MAINGUET, Jean-François, 38054 GRENOBLE CEDEX 09 (FR)
(74) Mandataire: Santarelli

(56) Documents cités:
- KR-A- 20170 040 164
- US-A1- 2015 277 840
- US-A1- 2016 012 772

## Description

### DOMAINE TECHNIQUE

L'invention concerne le domaine des dispositifs d'affichage à matrice de pixels. L'invention s'applique avantageusement à la réalisation d'écrans de grandes dimensions.

### ÉTAT DE LA TECHNIQUE ANTÉRIEURE

Classiquement, un dispositif d'affichage tel qu'un écran de télévision ou un écran d'ordinateur reçoit un signal vidéo à travers un câble vidéo, par exemple un câble HDMI. Le signal vidéo correspond à un signal numérique codant, sans compression, des valeurs de luminosité à afficher pour chaque pixel d'une image (généralement au moins trois valeurs pour chaque pixel, c'est-à-dire une pour chaque couleur, dans le cas de pixels RVB). Ce signal vidéo est par exemple calculé par une carte graphique d'un dispositif (ordinateur, décodeur, etc.) auquel le dispositif d'affichage est relié par le câble vidéo.

Le signal vidéo reçu par le dispositif d'affichage est en pratique réceptionné par une carte vidéo qui réalise différentes opérations de décodage, de conversion et de distribution de données à destination d'une matrice de pixels du dispositif d'affichage. La carte vidéo peut réaliser tout ou partie d'une conversion numérique-analogique des données destinées à la matrice de pixels. Dans le cas le plus fréquent où la conversion numérique-analogique est réalisée dans la carte vidéo, celle-ci délivre des valeurs analogiques affichables par la matrice de pixels. Dans le cas où la carte vidéo envoie des valeurs numériques aux pixels, la carte vidéo doit assurer la génération d'un ensemble de signaux de contrôle des pixels afin de commander le temps d'affichage de chaque pixel, par exemple avec des signaux de commande de modulation PWM (modulation de largeur d'impulsion) ou BCM (modulation codée binaire). Dans ces exemples de signaux de contrôle des pixels, il n'y a pas de conversion numérique-analogique dans la mesure où chaque pixel est commandé en « tout ou rien » (en anglais « On/Off »), ou autrement dit « émet / n'émet pas ».

Chaque pixel du dispositif d'affichage comprend généralement plusieurs éléments lumineux permettant l'affichage d'un pixel de chacune des images à afficher par le dispositif. Un pixel comporte généralement au moins trois éléments lumineux modulables en intensité et chacun dédié à l'une des couleurs rouge, vert et bleu. Chaque élément lumineux peut comporter soit un émetteur de lumière modulable en intensité directement dans la couleur cible de cet élément (cas de l'OLED) ou composé d'une source de lumière bleue qui est filtrée et/ou additionnée de phosphores pour obtenir la couleur cible (cas d'autres types de LED), soit un modulateur lumineux (cas des cristaux liquides) couplé à un filtre coloré adéquat pour obtenir, à partir d'une lumière blanche émise par une source commune aux pixels, la couleur cible.

Les valeurs analogiques obtenues après conversion numérique - analogique ou les durées d'émission pour chaque pixel sont proportionnelles aux niveaux d'intensité lumineuse à afficher par chacun des éléments lumineux des pixels. Chaque élément lumineux peut être couplé à un transistor de sélection permettant de commander l'affichage du signal lumineux par l'élément lumineux. Le dispositif d'affichage comporte également des circuits d'attaque de ligne (« row driver » en anglais) commandant les transistors de sélection, et des circuits d'attaque de colonnes (« column driver » en anglais) envoyant aux pixels les valeurs correspondant aux données à afficher.

Pour sécuriser l'échange de données (correspondant à une image ou une vidéo destinée à être affichée par un dispositif d'affichage), par exemple entre deux ordinateurs, des procédés de chiffrement sont utilisés (à clés symétriques, asymétriques, etc.). Les données sont chiffrées par le premier ordinateur puis envoyées au deuxième ordinateur qui les déchiffre. Les données déchiffrées sont ensuite transformées en un signal vidéo par la carte graphique du deuxième ordinateur, et le signal vidéo est envoyé à un dispositif d'affichage auquel le deuxième ordinateur est relié.

Dans une telle configuration, le signal vidéo envoyé par la carte graphique au dispositif d'affichage n'est pas chiffré et est donc vulnérable. Une interception des données est par exemple possible au sein du deuxième ordinateur dans lequel le déchiffrement est réalisé.

Le document US 7 206 943 propose de réaliser un chiffrement entre un ordinateur et un écran couplé à l'ordinateur. Pour cela, un circuit intégré dédié au déchiffrement est ajouté dans l'écran, en amont de la carte vidéo de l'écran. Bien que cette solution permette de sécuriser la liaison entre l'ordinateur et l'écran, les données transmises et reçues par l'ordinateur restent vulnérables dans l'écran.

Des solutions analogues sont proposées dans les documents EP 1 343 321 et « Implementing Cryptography on TFT Technology for Secure Display Applications » de P. Oikonomakos et al., CARDIS'06: Proceedings of the 7th IFIP WG 8.8/11.2 international conference on Smart Card Research and Advanced Applications, April 2006, Pages 32-47. Ces solutions présentent toutefois le même inconvénient.

D'autres technologies de dispositifs d'affichage sont divulguées par les documents US 2016/012772 A1, US 2015/277840 A1 et KR 2017 0040164 A.

### EXPOSÉ DE L'INVENTION

Un but de la présente invention est de proposer un dispositif d'affichage dont l'architecture permette d'améliorer la sécurité de transmission d'un signal image ou vidéo jusque dans les pixels du dispositif d'affichage.

Pour cela, l'invention propose un dispositif d'affichage comportant au moins :
- une matrice de blocs d'affichage, chaque bloc d'affichage étant configuré pour afficher plusieurs pixels d'une image et comprenant plusieurs éléments lumineux et au moins un circuit de pilotage configuré pour générer des signaux de commande des éléments lumineux du bloc d'affichage à partir de données numériques destinées à être affichées par les éléments lumineux du bloc d'affichage ;
- une matrice de circuits de contrôle, chacun couplé et associé à au moins un bloc d'affichage ;
- une carte vidéo comprenant au moins une entrée configurée pour recevoir un signal numérique chiffré à afficher par la matrice de blocs d'affichage, et au moins une sortie couplée à la matrice de circuits de contrôle, la carte vidéo étant configurée pour décoder le signal numérique chiffré et envoyer aux circuits de contrôle les données numériques chiffrées destinées à être affichées par les éléments lumineux et encodées dans un format adapté à la matrice de blocs d'affichage ;
dans lequel chaque circuit de contrôle comporte :
- un premier circuit mémoire configuré pour recevoir et mémoriser les données numériques chiffrées correspondant aux données numériques destinées à être affichées par les éléments lumineux du bloc d'affichage associé ;
- un deuxième circuit mémoire configuré pour mémoriser une clé de déchiffrement ;
- un circuit de déchiffrement couplé aux premier et deuxième circuits mémoire et configuré pour réaliser une opération de déchiffrement des données numériques chiffrées en utilisant la clé de déchiffrement ;
et dans lequel l'opération de déchiffrement est mise en œuvre, dans le circuit de déchiffrement de chaque circuit de contrôle, pour un groupe de bits relatif à l'affichage de pixels par le bloc d'affichage auquel ledit circuit de contrôle est associé.

Ce dispositif d'affichage propose de remplacer l'adressage classique lignes / colonnes par un adressage par blocs d'affichage. Cela est rendu possible grâce à l'utilisation de circuits électroniques en aval de la carte vidéo, à savoir les circuits de contrôle associés aux blocs d'affichage et les circuits de pilotage. Grâce à cette configuration rendant possible le regroupement de certaines opérations sur les données à afficher, le câblage nécessaire pour adresser les éléments lumineux est simplifié et nécessite moins de fils. De plus, les puces électroniques disposées généralement en périphérie de la matrice d'éléments lumineux sont éliminées et le câblage des lignes ou des colonnes peut disparaitre, ce qui rend cette configuration particulièrement avantageuse pour la réalisation d'écrans de grandes dimensions.

Une différence majeure entre un dispositif d'affichage classique et le dispositif d'affichage de l'invention est que les données envoyées en sortie de la carte vidéo sont ici numériques, et la génération des signaux de commande des éléments lumineux est réalisée au sein de chaque bloc d'affichage comprenant les éléments lumineux.

Dans ce dispositif d'affichage, la matrice de blocs d'affichage comporte tous les éléments permettant de réaliser, au sein de cette matrice et non en dehors de celle-ci comme dans l'art antérieur, une opération de déchiffrement des données numériques chiffrées reçues par le dispositif d'affichage. Ainsi, les données à afficher sont sécurisées jusqu'à leur affichage par la matrice de blocs d'affichage. De plus, l'opération de déchiffrement des données est mise en œuvre après la transmission de ces données par la carte vidéo jusqu'à la matrice de blocs d'affichage, ce qui améliore la sécurité les données à afficher. La sécurité des données à afficher est également améliorée du fait que les données destinées à chacun des blocs d'affichage sont chiffrées.

Cette répartition en blocs d'affichage est particulièrement bien adaptée à la mise en œuvre d'un chiffrement / déchiffrement des données numériques à afficher car les algorithmes de chiffrement / déchiffrement sont mis en œuvre pour des groupes de plusieurs bits. Chaque groupe de bits considéré pour le chiffrement / déchiffrement peut donc correspondre à un groupe de bits relatif à l'affichage de pixels par l'un des blocs d'affichage du dispositif.

Les blocs d'affichage peuvent être regroupés en groupes de blocs d'affichage, chaque groupe comprenant plusieurs blocs d'affichage. La carte vidéo peut envoyer les données numériques à afficher en parallèle aux différents groupes, ce qui permet d'optimiser la vitesse de transmission des données au sein de la matrice de blocs d'affichage.

La carte vidéo, pouvant également être appelée carte de pilotage, du dispositif d'affichage peut recevoir les données numériques depuis l'extérieur du dispositif d'affichage, par exemple via un câble tel qu'un câble HDMI. La carte vidéo, qui sert notamment à envoyer les données numériques aux différents blocs d'affichage, ne correspond pas à une carte graphique (qui fait par exemple partie d'un ordinateur, d'un décodeur, etc.) dont le rôle est de définir et envoyer les données numériques d'images complètes au dispositif d'affichage.

La carte vidéo correspond à une carte électronique comportant un ou plusieurs circuits intégrés et qui est dédiée au pilotage des matrices de circuits de contrôle et de blocs d'affichage. La carte vidéo réalise, à partir du signal numérique reçu en entrée, différentes opérations de décodage, de conversion et de distribution de données à destination de la matrice de circuits de contrôle. Dans le dispositif d'affichage selon l'invention, la carte vidéo ne réalise pas la conversion numérique-analogique des données destinées aux éléments lumineux. La carte vidéo peut assurer la génération d'un ensemble de signaux de contrôle, par exemple avec des signaux de commande de modulation PWM (modulation de largeur d'impulsion) ou BCM (modulation codée binaire). De plus, la carte vidéo peut ne comporter que des circuits intégrés numériques, ce qui facilite sa réalisation.

La carte vidéo est configurée pour réaliser un décodage du signal numérique reçu, puis un nouvel encodage des données numériques obtenues selon un format adapté à la matrice de blocs d'affichage, c'est-à-dire dans un format adapté aux circuits de contrôle, au type d'éléments lumineux et aux éléments servant à la distribution de ces données dans les blocs d'affichage.

Les signaux de commande des éléments lumineux commandent, à chacun des éléments lumineux, l'affichage d'une certaine valeur de luminosité pendant une période de référence d'affichage correspondant à la durée d'affichage d'une image par la matrice de blocs d'affichage.

La sortie de la carte vidéo correspond à une sortie de données numériques qui est couplée à la matrice de circuits de contrôle par un circuit ou réseau de distribution de données.

En outre, les données numériques destinées à être affichées par les éléments lumineux de chaque bloc d'affichage sont issues du signal numérique reçu par la carte vidéo et destiné à être affiché par la matrice de blocs d'affichage.

De manière avantageuse, chaque bloc d'affichage peut correspondre à un module distinct des autres blocs d'affichage et peut être reporté sur un support, par exemple un unique support, sur lequel se trouve la matrice de circuits de contrôle. De tels pixels sont très avantageux car ils sont particulièrement bien adaptés pour la réalisation d'écrans de grandes dimensions qui nécessite, pour des raisons de coûts, d'utiliser un support qui n'est pas un wafer semi-conducteur. La réalisation des blocs d'affichage sous la forme de tels modules permet également d'avoir plus de place pour les lignes d'alimentation électrique de ces blocs en raison de la surface de support disponible entre les modules, ce qui permet de réduire les résistances d'accès. Cette configuration permet en outre d'envisager la réalisation des lignes conductrices du dispositif dans un seul niveau.

Le support sur lequel se trouvent les blocs d'affichage et les circuits de contrôle peut être de type circuit imprimé, ou plus généralement peut correspondre à au moins un substrat sur lequel sont réalisées connexions électriquement conductrices, par exemple sous la forme de lignes et colonnes. Ce substrat peut par exemple être à base de verre, de plastique, ou de métal. Les lignes et colonnes de connexion peuvent être réalisées sur ce substrat par exemple par sérigraphie, par jet d'encre, etc.

Chaque circuit de contrôle peut comporter en outre un autre circuit mémoire, appelé par exemple quatrième circuit mémoire, configuré pour mémoriser des données numériques déchiffrées délivrées en sortie du circuit de déchiffrement.

Chaque circuit de déchiffrement peut être configuré pour recevoir en entrée des données complémentaires de déchiffrement, telles qu'un vecteur d'initialisation destiné à être utilisé lors de l'opération de déchiffrement. L'utilisation d'un tel vecteur d'initialisation pour le chiffrement et le déchiffrement des données permet d'améliorer la sécurité des données numériques à afficher.

Chaque circuit de contrôle peut comporter un troisième circuit mémoire configuré pour mémoriser un nombre binaire associé au circuit de contrôle (qui peut être vu comme correspondant à un numéro de série du circuit de contrôle), et le circuit de déchiffrement du circuit de contrôle peut être configuré pour réaliser l'opération de déchiffrement en utilisant en outre le nombre binaire associé au circuit de contrôle. L'utilisation d'un tel nombre binaire pour le chiffrement et le déchiffrement des données permet d'améliorer la sécurité des données numériques à afficher.

Le dispositif d'affichage peut être configuré pour recevoir en entrée au moins une clé de session chiffrée et peut comporter en outre au moins une unité de déchiffrement de la clé de session chiffrée, ladite unité de déchiffrement étant configurée pour utiliser au moins une clé privée mémorisée dans l'unité de déchiffrement. Dans cette configuration, les données numériques peuvent être transmises au dispositif d'affichage par chiffrement asymétrique, améliorant ainsi la sécurité sur la transmission de ces données jusqu'aux circuits de contrôle et facilitant la distribution des clés. La clé de session peut être une clé symétrique et peut être obtenue en utilisant une clé publique.

De manière avantageuse, chaque circuit de contrôle peut comporter une unité de déchiffrement de la clé de session chiffrée. Ainsi, la clé de session déchiffrée n'est pas transmise depuis l'unité de déchiffrement jusqu'aux circuits de contrôle, ce qui améliore encore la sécurité sur les données.

Chaque circuit de déchiffrement peut être configuré pour réaliser l'opération de déchiffrement en utilisant des données numériques précédemment déchiffrées par le circuit de déchiffrement et/ou des données numériques chiffrées précédemment reçues par le circuit de contrôle associé et/ou des données numériques précédemment déchiffrées par le circuit de déchiffrement d'au moins un autre circuit de contrôle (qui correspond par exemple à un circuit de contrôle voisin de celui auquel appartient le circuit de déchiffrement). Pour le déchiffrement des données numériques correspondant à une image à afficher, le chiffrement et le déchiffrement peuvent être réalisés en utilisant les données numériques chiffrées et/ou déchiffrées d'au moins une image précédemment affichée par le dispositif d'affichage, ce qui a pour avantage de ne pas nécessiter l'attente d'un déchiffrement de données par un autre circuit de déchiffrement. Il est également possible que le chiffrement et le déchiffrement soient réalisés en utilisant des données de l'image à afficher destinées à être affichées par un autre bloc d'affichage qui fait par exemple partie de la même ligne que le bloc pour lequel le déchiffrement des données est réalisé.

Chaque circuit de contrôle peut comporter en outre un circuit de décompression configuré pour réaliser, après la mise en œuvre de l'opération de déchiffrement, une opération de décompression des données numériques déchiffrées.

Le dispositif d'affichage peut comporter en outre au moins une mémoire de type FIFO (« First In First Out » en anglais) configurée pour former une mémoire de stockage tampon des données numériques chiffrées reçues avant la mise en œuvre de l'opération de déchiffrement. De manière avantageuse, chaque circuit de contrôle peut comporter une telle mémoire tampon. Une telle mémoire tampon permet d'absorber les variations de débit des données numériques chiffrées reçues, notamment lorsque de la compression est mise en œuvre. Dans un mode de réalisation particulier, cette mémoire FIFO peut faire partie du premier circuit mémoire.

Dans une configuration particulière, le dispositif d'affichage peut comporter au moins un bus de données auquel chacun des circuits de contrôle est couplé, et le premier circuit mémoire de chaque circuit de contrôle peut former un circuit de réception de données configuré pour identifier les données numériques chiffrées destinées à être affichées par les éléments lumineux du bloc d'affichage associé au circuit de contrôle.

Dans cette configuration particulière, le routage des différentes parties de données numériques dans les différents blocs d'affichage peut être réalisé par adressage. Cette configuration peut être mise en œuvre quelle que soit la taille des parties des données numériques, c'est-à-dire quelle que soit la quantité de données numériques destinées à chaque bloc d'affichage, que cette taille soit constante ou non d'un bloc d'affichage à l'autre.

Dans une autre configuration particulière, les premiers circuits mémoires des circuits de contrôle peuvent comporter des registres à décalage couplés en série d'un circuit de contrôle à l'autre. Une telle configuration peut être mise en œuvre lorsque la taille des parties des données numériques envoyées aux blocs d'affichage est constante.

Chaque circuit de contrôle peut être formé par une puce distincte du bloc d'affichage associé (ce qui a pour avantage que tous les blocs d'affichage peuvent être identiques), ou chaque circuit de contrôle peut être intégré dans le bloc d'affichage associé.

Les circuits de pilotage des éléments lumineux peuvent comporter des modulateurs PWM ou BCM, ou des convertisseurs numérique - analogique.

L'invention concerne également un procédé de transmission sécurisée de données numériques entre un dispositif de chiffrement et un dispositif d'affichage tel que décrit précédemment, comportant au moins les étapes de :
- envoi de caractéristiques de la matrice de blocs d'affichage, de caractéristiques de chaque bloc d'affichage et de données complémentaires de chiffrement depuis le dispositif d'affichage au dispositif de chiffrement ;
- chiffrement des données numériques à envoyer par le dispositif de chiffrement à partir des données complémentaires de chiffrement, et en utilisant les caractéristiques de la matrice de blocs d'affichage, et éventuellement une génération de données complémentaires de déchiffrement associées aux données complémentaires de chiffrement ;
- envoi des données numériques chiffrées au dispositif d'affichage, accompagnées éventuellement des données complémentaires de déchiffrement, chiffrées ou non ;
- déchiffrement, par le dispositif d'affichage, des données numériques chiffrées en utilisant éventuellement les données complémentaires de déchiffrement et éventuellement de données complémentaires caractéristiques de la matrice de blocs d'affichage.

Le procédé peut comporter en outre :
- avant l'envoi des données numériques chiffrées au dispositif d'affichage, un envoi d'une clé publique, faisant partie des données complémentaires de chiffrement, depuis le dispositif d'affichage au dispositif de chiffrement ;
- un chiffrement d'une clé de session avec la clé publique, la clé de session étant utilisée pour chiffrer les données numériques à envoyer, la clé de session chiffrée étant envoyée comme données complémentaires de déchiffrement depuis le dispositif de chiffrement au dispositif d'affichage ;
et dans lequel le déchiffrement peut être mis en œuvre avec la clé de session déchiffrée avec une clé privée mémorisée dans le dispositif d'affichage.

L'utilisation d'une clé de session telle que décrite ci-dessus correspond à une possibilité de mise en œuvre du procédé. Ce procédé peut toutefois être mis en œuvre d'une manière différente.

Le procédé peut comporter en outre :
- avant le chiffrement des données numériques, une compression des données numériques à envoyer au dispositif d'affichage ;
- après le déchiffrement des données numériques, une décompression des données numériques déchiffrées.

De manière avantageuse, la compression peut être mise en œuvre par blocs de données dont la taille est compatible avec celle des blocs de données utilisés lors du chiffrement de ces données.

Dans tout le texte de cette demande, le terme « couplé » peut désigner soit une connexion directe entre deux éléments, sans élément intermédiaire entre eux, soit une connexion indirecte entre ces deux éléments, c'est-à-dire une connexion formée à travers au moins un élément intermédiaire.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente schématiquement un dispositif d'affichage, objet de la présente invention, selon un premier mode de réalisation ;
- la figure 2 représente schématiquement un circuit de contrôle du dispositif d'affichage et une partie d'un bloc d'affichage auquel le circuit de contrôle est associé, selon le premier mode de réalisation ;
- la figure 3 représente schématiquement un dispositif d'affichage, objet de la présente invention, selon un deuxième mode de réalisation ;
- la figure 4 représente schématiquement un circuit de contrôle du dispositif d'affichage et une partie d'un bloc d'affichage auquel le circuit de contrôle est associé, selon une variante du deuxième mode de réalisation ;
- la figure 5 représente schématiquement un circuit de contrôle du dispositif d'affichage et une partie d'un bloc d'affichage auquel le circuit de contrôle est associé, selon un troisième mode de réalisation ;
- la figure 6 représente schématiquement un circuit de contrôle du dispositif d'affichage et une partie d'un bloc d'affichage auquel le circuit de contrôle est associé, selon un troisième mode de réalisation ;
- la figure 7 représente schématiquement un circuit de contrôle du dispositif d'affichage et une partie d'un bloc d'affichage auquel le circuit de contrôle est associé, selon un quatrième mode de réalisation ;
- la figure 8 représente schématiquement un circuit de contrôle du dispositif d'affichage et une partie d'un bloc d'affichage auquel le circuit de contrôle est associé, selon un cinquième mode de réalisation ;
- la figure 9 représente schématique le dispositif d'affichage, objet de la présente invention, couplé à un dispositif de chiffrement ;
- la figure 10 représente schématiquement un exemple de réalisation de puces électroniques intégrant des éléments lumineux et de l'électronique de commande d'un dispositif d'affichage, objet de la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

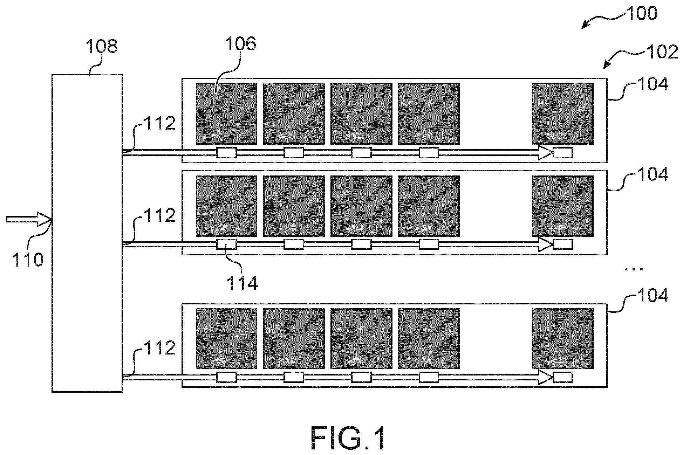

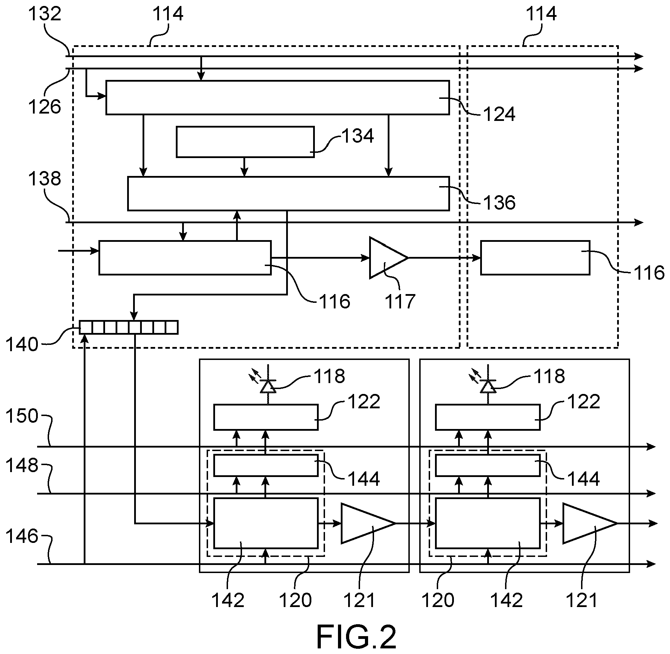

Un dispositif d'affichage 100 selon un premier mode de réalisation est décrit ci-dessous en lien avec les figures 1 et 2.

Le dispositif 100 comporte une matrice 102 de blocs d'affichage 106. Chaque bloc d'affichage 106 de la matrice 102 est configuré pour afficher au moins un pixel d'une image destinée à être affichée par le dispositif 100. Dans l'exemple de réalisation décrit ici, chaque bloc d'affichage 106 est configuré pour afficher plusieurs pixels de chaque image destinée à être affichée par le dispositif 100.

Chaque bloc d'affichage 106 comporte plusieurs éléments lumineux 118 distincts. Les éléments lumineux 118 correspondent par exemple à des LED (ou microLED) ou des OLED.

Outre ce ou ces éléments lumineux 118, chaque bloc d'affichage 106 comporte également des circuits mémoire 120 configurés pour mémoriser les données numériques déchiffrées destinées à être affichées par les éléments lumineux 118 du bloc d'affichage 106, et des circuits de pilotage 122 configurés pour générer des signaux de commande de ces éléments lumineux 118 à partir des données numériques déchiffrées destinées à être affichées par les éléments lumineux 118 du bloc d'affichage 106 et mémorisées dans les circuits mémoire 120 du bloc d'affichage 106. Chaque circuit mémoire 120 et chaque circuit de pilotage 122 peuvent être associés à un ou plusieurs éléments lumineux 118.

L'intégration de ces circuits électroniques 120, 122, par exemple réalisés en technologie CMOS, au sein des blocs d'affichage 106 avec les éléments lumineux 118 peut être réalisée comme décrit dans les documents EP 3 381060A1 et « A New Approach for Fabricating High-Performance MicroLED Displays » de F. Templier et al., SID Symposium Digest of Technical Papers, Volume 50 (1), June 1, 2019. Par exemple, les LED correspondant aux éléments lumineux 118 et les circuits électroniques 120, 122 de différents blocs d'affichage 106 peuvent être réalisés sur différents substrats 103, puis découpés, assemblés sous forme de modules 105 distincts (chaque bloc d'affichage 106 correspondant à un module 105 distinct des autres blocs d'affichage 106) et enfin reportés sur un support 107, correspondant par exemple à un ou plusieurs circuits imprimés ou à un ou plusieurs substrats tels que décrits précédemment, destiné à servir également de support aux autres éléments du dispositif 100.

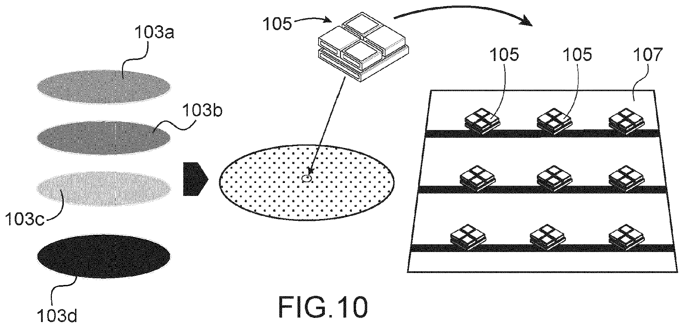

La figure 10 représente schématiquement la mise en œuvre d'une telle intégration des blocs d'affichage 106 sous forme de modules 105. Sur l'exemple de cette figure, des éléments lumineux 118 destinés à émettre chacune des couleurs rouge, vert et bleu sont réalisés sur des plaques de semi-conducteur (ou « wafers » en anglais) différentes référencées 103a, 103b et 103c pour chacune de ces couleurs. Les circuits électroniques (ici les circuits 120 et 122) sont réalisés en technologie CMOSsur une autre plaque de semi-conducteur 103d. Les éléments lumineux 118 réalisés sur les plaques 103a, 103b et 103c sont découpés puis assemblés sur la plaque 103d. Les blocs d'affichage 106 obtenus sont découpés sous la forme de modules indépendants 105. En variante, les éléments lumineux 118 peuvent être réalisés sur une seule plaque, et l'émission de couleur différente par ces éléments lumineux 118 est obtenue en ajoutant des phosphores sur les éléments lumineux 118 destinés à réaliser une émission lumineuse de couleur rouge ou verte. Dans ce cas, la plaque sur laquelle les éléments lumineux 118 sont réalisés peut être solidarisée à la plaque 103d sans découpe préalable des éléments lumineux 118.

Chaque module 105 forme un bloc d'affichage 106 comprenant les différents éléments lumineux 118 du bloc d'affichage 106, disposés sur une partie CMOS dans laquelle les circuits électroniques du bloc d'affichage 106 sont réalisés. Ces modules 105 sont ensuite reportés sur le support, portant la référence 107 sur la figure 10, à une distance souhaitée les uns des autres.

Ainsi, chaque module 105 forme un assemblage compact d'une ou plusieurs puces électroniques (avantageusement obtenues selon des procédés de fabrication de composants microélectroniques), doté d'une face de connexion comportant des plots de connexion destinés à être fixés et connectés électriquement à des plots de connexion correspondant au support de report. Ainsi, chaque module 105 comprend une puce monolithique ou un assemblage de plusieurs puces monolithiques connectées électriquement, et une pluralité de modules, par exemple identiques ou similaires, sont montés sur un même substrat de report, chaque module correspondant par exemple à un bloc d'affichage du dispositif d'affichage. A titre d'exemple, les modules élémentaires des dispositifs d'affichage décrits, comportent chacun une pluralité de LED et un circuit de commande à base de transistors, et peuvent être fabriqués selon des procédés identiques ou similaires à ceux décrits dans la demande de brevet WO 2017089676.

En variante, et notamment lorsque le dispositif d'affichage 100 correspond à un écran de petite taille comme par exemple ceux intégrés à des lunettes de réalité virtuelle, tous les circuits du dispositif d'affichage 100 peuvent être réalisé sur un même substrat semi-conducteur.

Le dispositif 100 peut correspondre à un écran couleur et chaque pixel de l'image affichée par le dispositif 100 est par exemple obtenu avec trois éléments lumineux 118 distincts, chacun destiné à émettre un signal lumineux de l'une des couleurs rouge, vert ou bleu.

En variante, chaque pixel de l'image affichée par le dispositif 100 peut être affiché par plus de trois éléments lumineux 118 distincts, comme par exemple lorsque le dispositif 100 est un dispositif multiscopique destiné à afficher simultanément une image selon plusieurs points de vue (dans le but d'afficher cette image en 3D), avec par exemple dans ce cas chaque pixel de l'image affichée par le dispositif 100 qui est affiché par autant d'éléments lumineux 118, ou d'ensembles d'éléments lumineux 118, distincts que de points de vue de l'image à afficher. Une telle variante est décrite en détail plus loin.

En variante, chaque pixel de l'image affichée par le dispositif 100 peut être obtenu avec un seul élément lumineux 118, par exemple lorsque le dispositif 100 correspond à un écran monochrome.

Dans la configuration particulière représentée sur la figure 1, la matrice 102 est divisée en plusieurs groupes 104. Chaque groupe 104 comporte plusieurs blocs d'affichage 106.

Selon un exemple de réalisation, les groupes 104 forment des lignes de blocs d'affichage 106. Les blocs d'affichage 106 sont par exemple configurés pour afficher des blocs de 8 x 8 pixels de l'image affichée par le dispositif 100. D'autres tailles de blocs d'affichage 106 sont possibles, et sont par exemple configurés pour afficher chacun un bloc de 16 x 16 pixels, 32 x 32 pixels, etc., de l'image affichée par le dispositif 100.

Dans une autre configuration, il est possible que la matrice 102 ne comporte qu'un seul groupe 104 et que tous les blocs d'affichage 106 de la matrice 102 fassent partie de ce groupe 104.

Le dispositif 100 comporte une carte vidéo 108 comprenant une entrée 110 configurée pour recevoir un signal numérique au moins partiellement chiffré et correspondant à la ou aux images, ou à la ou aux vidéos, destinées à être affichées par le dispositif 100. L'entrée 110 est par exemple de type HDMI.

La carte vidéo 108 peut comporter en outre au moins une mémoire (non visible sur la figure 1) permettant de mémoriser les données numériques chiffrées reçues sur l'entrée 110 et correspondant à une ou plusieurs images à afficher par dispositif 100. Cette ou ces mémoires sont avantageusement de type FIFO.

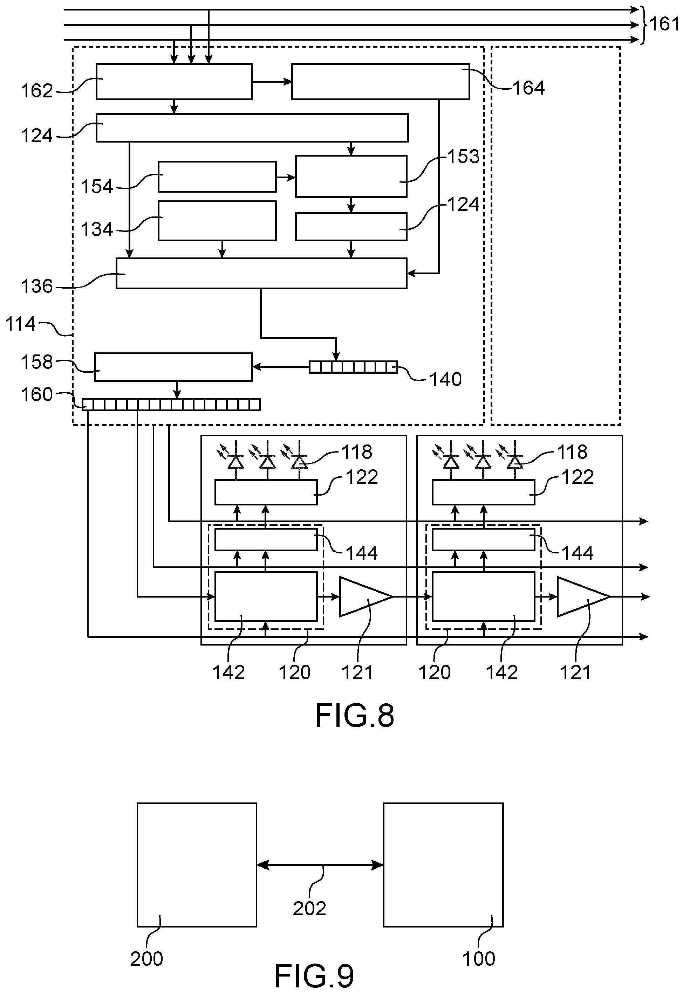

Le signal image ou vidéo reçu par le dispositif 100 sur l'entrée 110 de la carte vidéo 108 peut provenir de n'importe quel dispositif électronique ou informatique tel qu'un ordinateur, un décodeur, etc. La figure 9 représente schématiquement le dispositif d'affichage 100 couplé à un dispositif 200 destiné à réaliser le chiffrement des données à afficher par le dispositif d'affichage 100. Une liaison 202 entre les dispositifs 100, 200 est formée par exemple d'un câble HDMI, voire également d'un câble supplémentaire pour le transfert de données de chiffrement ou de données complémentaires pour le déchiffrement entre les dispositifs 100, 200. Ainsi, il est possible que le dispositif 200 soit proche du dispositif d'affichage 100, comme par exemple lorsque le dispositif 200 correspond à un ordinateur et que le dispositif d'affichage 100 correspond à un écran relié à cet ordinateur. En variante, il est possible que le dispositif 200 soit éloigné du dispositif d'affichage 100 et couplé au dispositif d'affichage 100 à travers un réseau informatique tel qu'Internet. La configuration choisie dépend de la ligne à sécuriser : sécurisation locale de la liaison HDMI, échange avec un utilisateur distant, etc.

La carte vidéo 108 comporte une ou plusieurs sorties 112 chacune couplée à au moins un groupe 104. Sur l'exemple de la figure 1, chaque sortie 112 est couplée à un seul groupe 104. La carte vidéo 108 est configurée pour décoder le signal numérique chiffré reçu en entrée, encoder les données numériques chiffrées dans un format adapté à la matrice 102 et les envoyer sur chacune des sorties 112 pour qu'elles soient affichées par les blocs d'affichage 106 couplés à la sortie 112. Lorsque tous les blocs d'affichage 106 font partie d'un même groupe 104, la carte vidéo 108 peut ne comporter qu'une seule sortie 112.

Les blocs d'affichage 106 de la matrice 102 peuvent être répartis dans des groupes 104 configurés différemment que dans l'exemple décrit ci-dessus.

Sur l'exemple de la figure 1, les sorties 112 de la carte vidéo 108 sont reliées directement aux groupes 104 de blocs d'affichage 106. En variante, lorsque le nombre de groupes 104 est trop important par rapport au nombre de sorties 112 disponibles pour une seule puce, la carte vidéo 108 peut comporter un circuit principal réalisant les fonctions précédemment décrites pour la carte vidéo 108, et des circuits intermédiaires (non utilisés dans la configuration représentée sur la figure 1) interposés entre le circuit principal et les groupes 104. Chaque sortie du circuit principal peut être reliée à un circuit intermédiaire, et chaque circuit intermédiaire peut comporter plusieurs sorties chacune reliée à un groupe 104 afin d'assurer la distribution et la répartition des données numériques chiffrées aux différents groupes 104.

Le dispositif 100 comporte également une matrice de circuits de contrôle 114 chacun couplé et associé à un bloc d'affichage 106. Chacun des circuits de contrôle 114 est configuré pour déchiffrer, mémoriser et envoyer au bloc d'affichage 106 associé une partie des données numériques envoyées au groupe 104 auquel appartient le bloc d'affichage 106 associé et destinées à être affichées par les éléments lumineux 118 du bloc d'affichage 106 associé.

Un exemple de réalisation d'un des circuits de contrôle 114 du dispositif d'affichage 100 selon le premier mode de réalisation est décrit ci-dessous en lien avec la figure 2.

Chaque circuit de contrôle 114 comporte un premier circuit mémoire formant un circuit de réception de données chiffrées et correspondant, dans cet exemple de réalisation, à un registre à décalage 116. Les données numériques chiffrées sont transmises au sein du ou de chaque groupe 104 en reliant en série les registres en décalage 116 des circuits de contrôle 114 d'un même groupe 104. Chaque circuit de contrôle 114 peut comporter un amplificateur 117, ou buffer, pour assurer le maintien du niveau d'amplitude des données transmises d'un circuit de contrôle 114 à l'autre. Dans le ou chaque groupe 104, le registre à décalage 116 d'un premier circuit de contrôle 114 comporte son entrée reliée à la ou l'une des sorties 112 de la carte vidéo 108, ou à l'une des sorties d'un des circuits intermédiaires lorsque la carte vidéo 108 comporte de tels circuits intermédiaires. Le cadencement du registre à décalage 116 peut être commandé par un signal d'horloge transmis sur un fil 138 qui est relié à une entrée d'horloge du registre à décalage 116. Ce signal d'horloge peut cadencer les registres à décalage 116 de tous les circuits de contrôle 114 de la matrice 102.

En variante, dans chaque groupe 104, les données numériques chiffrées peuvent être transmises sur un bus de données auquel tous les circuits de contrôle 114 sont couplés en parallèle. L'identification, par chacun des circuits 114, des données numériques chiffrées qui lui sont destinées peut dans ce cas être réalisée par un décodage d'adresses associées aux données, ce décodage étant réalisé par un circuit de décodage d'adresse intégré à chacun des circuits de contrôle 114. Dans ce cas, le circuit assurant la mémorisation des données numériques chiffrées au sein de chacun des circuits de contrôle 114 peut ne pas être un registre à décalage.

Sur l'exemple de la figure 1, les circuits de contrôle 114 sont réalisés sous la forme de puces électroniques distinctes des puces comprenant les blocs d'affichage 106. En variante, il est possible que chacun des circuits de contrôle 114 soit formé au sein de la même puce que celle comportant le bloc d'affichage 106 associé, ce qui facilite la distribution des données entre le circuit de contrôle 114 et les circuits mémoires 120 du bloc d'affichage 106 se trouvant sur la puce.

Les circuits mémoires 120 sont chacun configurés pour mémoriser des données numériques déchiffrées destinées à être affichées par le ou les éléments lumineux 118 couplé(s) au circuit mémoire 120. La capacité mémoire de chaque circuit mémoire 120 correspond au moins au nombre de bits (par exemple 8) sur lesquels la ou les données à afficher par le ou les éléments lumineux 118 couplés au circuit mémoire 120, et qui sont ici destinés à afficher un pixel de l'image affichée par le dispositif 100, sont codées.

Dans une configuration particulière, au sein de chaque bloc d'affichage 106, les données numériques déchiffrées à afficher sont propagées en reliant en série les circuits mémoires 120 (qui incluent pour cela des registres à décalage). Sur la figure 2, la liaison entre la sortie d'un circuit mémoire 120 et l'entrée d'un circuit mémoire 120 suivant comporte un amplificateur ou buffer 121 permettant de maintenir le niveau des signaux de données transmis d'un circuit mémoire 120 à l'autre.

Dans une configuration alternative, les données numériques déchiffrées à afficher peuvent être propagées dans tous les circuits mémoires 120 du bloc d'affichage 106 sont reliés en parallèle. Un adressage des données numériques déchiffrées est dans ce cas réalisé pour que chaque circuit mémoire 120 identifie, via un circuit de décodage d'adresse, les données qui lui sont destinées.

Les données numériques reçues par le dispositif 100 sur l'entrée 110 de la carte vidéo 108 puis transmises par la carte vidéo 108 aux circuits de contrôle 114 sont chiffrées et sont destinées à être déchiffrées dans les circuits de contrôle 114. Pour réaliser ce déchiffrement, chaque circuit de contrôle 114 comporte des circuits électroniques mettant en œuvre ce déchiffrement des données.

Comme indiqué précédemment, chaque circuit de contrôle 114 comporte un premier circuit mémoire configuré pour recevoir et mémoriser les données numériques chiffrées correspondant aux données numériques destinées à être affichées par les éléments lumineux 118 du bloc d'affichage 106 associé. Dans le premier mode de réalisation décrit ici, ce premier circuit mémoire correspond au registre à décalage 116.

Chaque circuit de contrôle 114 comporte également un deuxième circuit mémoire 124 configuré pour mémoriser des caractéristiques de chiffrement incluant au moins une clé de déchiffrement. Cette clé de déchiffrement est avantageusement une clé symétrique, c'est-à-dire une clé similaire à celle qui a été utilisée pour chiffrer les données numériques chiffrées reçues par le dispositif d'affichage 100. En outre, cette clé de déchiffrement correspond avantageusement à une clé de session destinée à être modifiée régulièrement entre l'affichage de différentes images par le dispositif d'affichage 100, par exemple à l'affichage de chaque image ou correspondant à des sessions différentes. La clé de déchiffrement est de préférence échangée, entre le dispositif d'affichage 100 et le dispositif chiffrant les données numériques, séparément ou non des données numériques chiffrées, par l'intermédiaire d'un câble distinct ou non de celui utilisé pour la transmission des données numériques chiffrées entre le dispositif d'affichage 100 et le dispositif ayant réalisé le chiffrement des données.

Sur l'exemple de réalisation de la figure 2, chaque circuit de contrôle 114 peut recevoir également en entrée des données complémentaires de déchiffrement telles qu'un vecteur d'initialisation, correspondant par exemple à un nombre binaire aléatoire initialement choisi lors du chiffrement des données, utilisé comme donnée d'entrée lors de ce chiffrement et transmis au dispositif d'affichage 100. L'utilisation d'un tel vecteur d'initialisation, qui est optionnelle, permet d'éviter que deux chiffrements d'une même image chiffrée avec la même clé de chiffrement aboutissent au même résultat. Le vecteur d'initialisation reçu par tous les circuits de contrôle 114 peut être le même, ce qui évite d'avoir à mettre en œuvre un adressage pour l'envoi de ce vecteur d'initialisation aux circuits de contrôle 114.

Sur l'exemple de réalisation de la figure 2, la clé de déchiffrement et le vecteur d'initialisation sont transmis sur un même fil 126 auquel chacun des circuits de contrôle 114 est relié par l'intermédiaire du deuxième circuit mémoire 124 configuré pour mémoriser les données complémentaires de déchiffrement comme le vecteur d'initialisation et la clé de déchiffrement avant leur utilisation pour le déchiffrement des données. En outre, dans cet exemple de réalisation, la réception des données par le deuxième circuit mémoire 124 est cadencé par un signal d'horloge transmis sur un fil 132 auquel le deuxième circuit mémoire 124 est relié. En variante, il est possible que le deuxième circuit mémoire 124 soit cadencé par un même signal d'horloge que celui servant au cadencement du registre à décalage 116 (l'un des deux fils 132, 138 pouvant être supprimé).

Sur l'exemple de réalisation de la figure 2, chaque circuit de contrôle 114 comporte optionnellement un élément mémoire 134 dans lequel est stocké un autre nombre binaire, appelée numéro de série, associé au circuit de contrôle 114 (chaque circuit de contrôle 114 ayant un numéro de série des autres) et qui correspond à un paramètre également utilisé dans le chiffrement des données. Ce numéro de série est par exemple un nombre de valeur fixe pouvant être codé de manière matérielle, c'est à dire dans un mémoire morte, dans le circuit de contrôle 114, par exemple par des pistes conductrices de la puce formant le circuit de contrôle 114 et qui, selon qu'elles soient chacune reliées à une ligne d'alimentation électrique ou à la masse, définissent une suite de « 0 » et de « 1 » binaires correspondant au numéro de série. L'utilisation d'un tel numéro de série permet de complexifier le chiffrement réalisé et éviter des résultats de chiffrement identiques pour des données numériques identiques. Lorsque de tels numéros de série sont utilisés, la liste des numéros de série est transmise au dispositif de chiffrement parmi les données complémentaires de chiffrement, préalablement au chiffrement des données.

Chaque circuit de contrôle 114 comporte également un circuit de déchiffrement 136 comprenant des entrées couplées au premier circuit mémoire (registre à décalage 116 sur l'exemple de la figure 2), au deuxième circuit mémoire 124 et à l'élément mémoire 134, et configuré pour réaliser un déchiffrement des données numériques chiffrées stockées dans le registre 116 en utilisant la clé de déchiffrement (et le vecteur d'initialisation et le numéro de série dans l'exemple de la figure 2). Cette opération de déchiffrement correspond par exemple à un algorithme de déchiffrement par bloc réalisé entre les données numériques chiffrées et la clé de déchiffrement, à laquelle sont éventuellement associés le numéro de série et le vecteur d'initialisation.

Dans le premier mode de réalisation, chaque circuit de contrôle 114 comporte également un autre circuit mémoire 140, appelé par exemple quatrième circuit mémoire, configuré pour mémoriser les données numériques déchiffrées délivrées en sortie du circuit de déchiffrement 136.

La capacité mémoire du circuit mémoire 140 est par exemple au moins égale au nombre total de bits sur lesquels sont codées les données à afficher par chaque bloc d'affichage 106. Par exemple, pour des blocs 106 de 8 x 8 pixels, chacun comprenant un seul élément lumineux 118 affichant une donnée codée sur 8 bits, la capacité de chacun de ces circuits mémoire 140 est par exemple égale à 512 bits.

Les données numériques chiffrées reçues par le dispositif d'affichage 100 ont été préalablement chiffrées en prenant en compte les caractéristiques de la matrice 102 du dispositif d'affichage 100, comme par exemple : dimensions de la matrice 102, nombre de pixels total affichable par la matrice 102, nombre de blocs d'affichage 106, agencement de ces blocs d'affichage 106 dans la matrice 102, nombre de pixels affichables par bloc d'affichage 106, nombre d'éléments lumineux 118 affichant chaque pixel, liste des numéros de série associés aux blocs d'affichage 106.

Ici, le déchiffrement des données est réalisé par bloc d'affichage 106. Autrement dit, les données numériques destinées à être affichées par chacun des blocs d'affichage 106 sont déchiffrées ensemble. Les caractéristiques de chaque bloc d'affichage 106 sont donc transmises au dispositif de chiffrement : sa taille en nombre de bits, l'algorithme à utiliser, l'éventuel numéro de série, sa position dans la matrice 102. En outre, la méthode d'échange de clés est également transmise au dispositif de chiffrement, par exemple un échange de clé symétrique ou un chiffrement de clé de session par une clé publique. Une clé de session différente peut être utilisée pour chaque bloc d'affichage 106, ou les clés de session peuvent être changées régulièrement.

En outre, le chiffrement et le déchiffrement réalisés pour les données de chaque bloc d'affichage 106 peuvent être réalisés en séquence de sous-blocs. Par exemple, il est possible de réaliser plusieurs fois, séquentiellement ou en parallèle, un chiffrement de type AES utilisant des blocs de données de 128 bits pour les données destinées à chaque bloc d'affichage 106.

Une fois les données numériques déchiffrées par les circuits de déchiffrement 136 et mémorisés dans les circuits mémoires 140, celles-ci sont envoyées dans les circuits mémoires 120 des blocs d'affichage 106.

Sur l'exemple de réalisation de la figure 2, chaque circuit mémoire 120 comporte un registre à décalage 142 (pouvant stocker un nombre de bits égal au nombre de bits sur lequel est codée la donnée à afficher par l'élément lumineux 118 associé à ce circuit mémoire 120) couplé à un verrou 144 (circuit « latch », dont la capacité mémoire est au moins égale à celle du registre à décalage 142). L'un des registres 142 du bloc d'affichage 106, par exemple destiné à afficher le premier pixel des données à afficher par le bloc d'affichage 106, reçoit en entrée les données numériques déchiffrées mémorisées dans le circuit mémoire 140 du circuit de contrôle 114 associé. Les registres à décalage 142 sont couplés en série, via leurs entrées et sorties de données, au sein de chaque bloc d'affichage 106 via les amplificateurs 121, ou buffer. Tous les registres à décalage 142 du bloc d'affichage 106 reçoivent en entrée un signal d'horloge de décalage, généré par le circuit de contrôle 114 ou par la carte vidéo 108, transitant sur un fil référencé 146, qui est également appliqué en entrée du circuit mémoire 140 et qui commande le décalage des données dans les registres 142. Les verrous 144 de du bloc d'affichage 106 reçoivent un signal de déclenchement de mémorisation, par exemple généré par le circuit de contrôle 114 ou par la carte vidéo 108, et qui commande le stockage, dans les verrous 144, des valeurs numériques présentes dans les registres à décalage 142. Ce signal de déclenchement de mémorisation transite, sur la figure 2, sur un fil portant la référence 148.

Un signal de commande d'affichage, ou signal d'horloge de conversion, transite sur un fil 150 et est appliqué en entrée des circuits de pilotage 122 pour commander la conversion des données numériques déchiffrées en signaux de commande appliqués en entrée des éléments lumineux 118. Dans l'exemple de réalisation décrit ici, chaque circuit 122 correspond à un modulateur PWM convertissant les données numériques à afficher par l'élément lumineux 118 auquel il est couplé en un signal analogique modulé PWM (modulation de largeur d'impulsion). La sortie de chaque circuit de pilotage 122 est couplée à l'un des éléments lumineux 118. Le signal d'horloge de conversion peut être généré par le circuit de contrôle 114 ou par la carte vidéo 108. La fréquence du signal d'horloge de conversion est choisie comme étant suffisamment élevée pour éviter des problèmes de scintillement, et par exemple comprise entre 100 et 1000 fois la fréquence d'affichage d'images du dispositif 100, voire plus importante encore, comme par exemple égale à quelques MHz ou quelques dizaines de MHz (l'utilisation d'une fréquence élevée a pour avantage de réduire le besoin de précision sur la fréquence de ce signal).

En variante du modulateur PWM décrit ci-dessus, il est possible que chaque circuit de pilotage 122 corresponde à un modulateur BCM (modulation de code binaire). Des détails d'une telle modulation appliquée à l'affichage d'une matrice de pixels sont donnés dans le document EP 3 550 550 A1.

Selon une autre variante, chaque circuit de pilotage 122 peut comporter, à la place du modulateur PWM ou BCM, un convertisseur numérique - analogique délivrant en sortie un signal analogique pilotant l'émission lumineuse de l'un des éléments lumineux 118. Chaque convertisseur numérique - analogique convertit la donnée numérique à afficher mémorisé dans un des verrous 144 en un courant envoyé à l'entrée de l'élément lumineux 118 et dont la valeur est par exemple déterminée suivant une courbe de conversion adaptée aux caractéristiques de l'élément lumineux 118.

Toutefois, par rapport aux convertisseurs numérique - analogique, les modulateurs PWM ou BCM ont pour avantage d'être moins encombrants et d'envoyer en entrée des éléments d'affichage des signaux analogiques de même amplitude maximale, ce qui facilite la commande des éléments lumineux 118.

Du fait que des registres à décalage 142 soient utilisés au sein des blocs d'affichage 106, la quantité de données numériques correspondant à chaque pixel de l'image à afficher est choisie comme étant identique pour tous les pixels à afficher par les éléments lumineux 118 du bloc d'affichage 106.

Au sein de chaque bloc d'affichage 106, les registres à décalage 142 peuvent être reliés en série de différentes manières : ligne par ligne, colonne par colonne, en serpentin, etc. Le schéma de connexion des registres 142 entre eux au sein de chaque bloc d'affichage 106 est pris en compte lors du chiffrement afin que chaque registre 142 envoie bien aux éléments lumineux 118 les données qui lui sont destinées.

En outre, dans l'exemple de réalisation précédemment décrit, chaque ensemble de circuits destiné à afficher un pixel d'une image à afficher reçoit en entrée le signal de données, un signal d'horloge de décalage commandant les registres à décalage 142, un signal d'horloge de conversion destiné aux modulateurs PWM ou BCM, et un signal de déclenchement de mémorisation commandant les verrous 144. En variante, les circuits destinés à afficher un pixel de l'image peuvent ne recevoir qu'un seul signal. Dans cet unique signal, les données peuvent être codées en utilisant la durée des impulsions telle que par exemple :
- un état haut de courte durée (par exemple égale à un tiers de la période) code un bit dans un premier état (par exemple « 0 ») ;
- un état haut de longue durée (par exemple égale à deux tiers de la période) code un bit dans un deuxième état (par exemple « 1 ») ;
- un état bas pendant toute une période correspond à un reset, commandant l'affichage des données se trouvant dans les registres 142.

Dans cette configuration, entre les circuits de contrôle 114 et les circuits 120, 122, un circuit supplémentaire génère, à partir de l'unique signal reçu, le signal de données numériques, le signal d'horloge de décalage commandant les registres à décalage 142, et le signal de déclenchement de mémorisation commandant la mémorisation, dans les verrous 144, des valeurs des données présentes dans les registres 142. Cette configuration a pour avantage de limiter le nombre de fils connectés en entrée et en sortie des circuits 120 et 120, facilitant ainsi la réalisation du dispositif 100.

Dans l'exemple de réalisation décrit ci-dessus, tous les circuits de contrôle 114 sont identiques, à l'exception des numéros de série mémorisés qui changent d'un circuit de contrôle 114 à l'autre.

Dans une variante de réalisation, chaque circuit de contrôle 114 peut ne pas prendre en compte de numéro de série et/ou de vecteur d'initialisation. Dans ce cas, ces éléments ne sont pas utilisés ni lors du chiffrement ni lors du déchiffrement des données numériques.

Avec le dispositif d'affichage 100 selon le premier mode de réalisation, il est possible de mettre en œuvre un procédé de transmission sécurisée de données numériques à afficher mettant en œuvre les étapes suivantes :
- envoi de caractéristiques de la matrice 102 de blocs d'affichage 106 et de données complémentaires de chiffrement depuis le dispositif d'affichage 100 à un dispositif de chiffrement qui comporte les données numériques à afficher par le dispositif d'affichage 100 ;
- chiffrement des données numériques à envoyer (de manière chiffrée) par le dispositif de chiffrement en utilisant au moins une clé de session obtenue à partir des données complémentaires de chiffrement, et en utilisant les caractéristiques de la matrice 102 ;
- envoi des données numériques chiffrées au dispositif d'affichage 100, accompagnées éventuellement de données complémentaires de déchiffrement, chiffrées ou non ;
- déchiffrement, par le dispositif d'affichage 100, des données numériques chiffrées en utilisant la clé de session qui a été mémorisée dans chaque circuit de contrôle 114 du dispositif d'affichage 100, et en utilisant éventuellement les données complémentaires de déchiffrement, et éventuellement d'autres données complémentaires caractéristiques de la matrice 102 de blocs d'affichage 106.

Dans tous les cas, les données complémentaires de chiffrement sont envoyées depuis le dispositif d'affichage 100 vers le dispositif 200, et les données complémentaires de déchiffrement sont envoyées depuis le dispositif 200 vers le dispositif d'affichage 100.

Dans un deuxième mode de réalisation, il est possible que la clé de déchiffrement transmise à tous les circuits de contrôle 120 corresponde à une clé de session de type symétrique chiffrée avec une clé publique. Pour pouvoir servir à déchiffrer les données numériques chiffrées, la clé de session chiffrée est déchiffrée dans le dispositif 100 qui comporte une clé privée correspondant à la clé publique utilisée. Ce deuxième mode de réalisation permet de rendre plus rapide le déchiffrement et de réduire la consommation énergétique liée au déchiffrement. Il est par exemple possible de transmettre au dispositif de chiffrement la clé publique avec les caractéristiques du dispositif d'affichage 100.

Le déchiffrement de cette clé de session chiffrée peut être réalisé par une ou plusieurs unités de déchiffrement 152 se trouvant en dehors des blocs d'affichage 106, qui reçoit en entrée la clé de session chiffrée et qui utilisé une clé privée mémorisée dans ces unités pour réaliser le déchiffrement de cette clé de session. La clé de session déchiffrée est ensuite transmise à tous les circuits de contrôle 114 depuis une sortie de la ou des unités de déchiffrement 152.

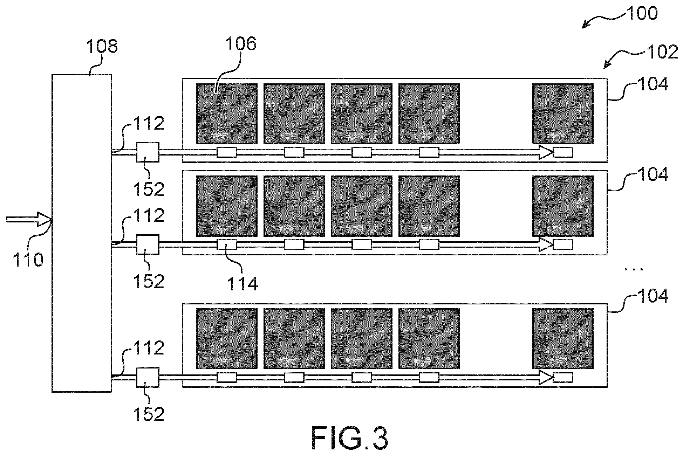

La figure 3 représente schématiquement le dispositif 100 dans une telle configuration. Dans la configuration représentée sur la figure 3, chaque unité de déchiffrement 152 est associée à un des groupes 104. Avec plusieurs unités de déchiffrement 152, il est possible d'utiliser une clé de session différente pour chacune des unités de déchiffrement. Selon une autre variante, il est possible que le dispositif 100 comporte une seule unité de déchiffrement 152 disposée dans la carte vidéo 108. La clé de session déchiffrée est dans ce cas transmise à tous les circuits de contrôle 114 depuis une sortie de cette unité de déchiffrement 152. Ces deux cas permettent d'éviter l'écriture d'une clé privée dans plusieurs emplacements de la matrice 102, rendant plus simple la gestion et la distribution initiale de la paire de clés, publique et privée, et augmentant la sécurité en limitant la duplication de la clé privée dans moins de puces électroniques.

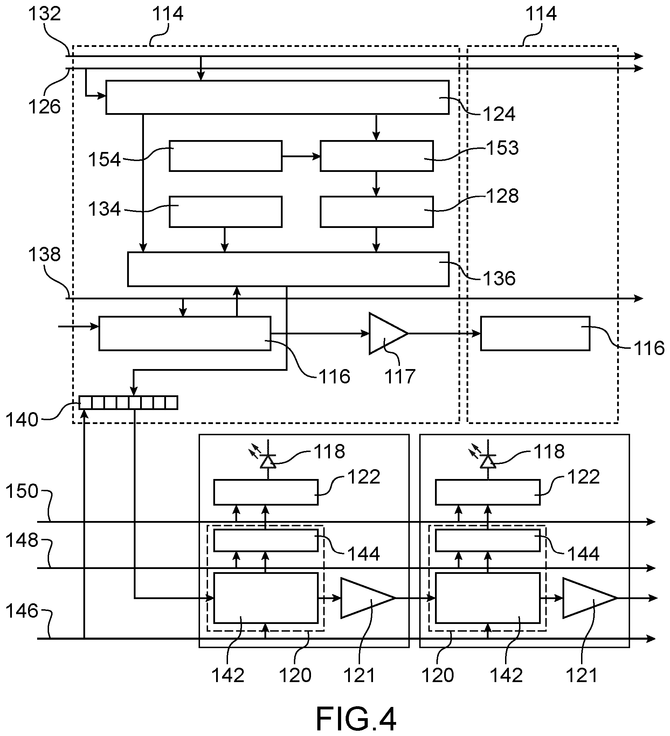

En variante, le déchiffrement de la clé de session chiffrée peut être réalisé au sein de chaque circuit de contrôle 114. La figure 4 représente schématiquement un exemple de réalisation d'un circuit de contrôle 114 selon une telle variante.

Le circuit de contrôle 114 selon cette variante et représenté sur la figure 4 comporte tous les éléments précédemment décrits en lien avec la figure 2. En plus de ces éléments, le circuit de contrôle 114 comporte l'unité de déchiffrement 152 qui reçoit en entrée la clé de session chiffrée et une clé privée mémorisée dans un autre circuit mémoire 154 du circuit de contrôle 114. La programmation initiale de cet autre circuit mémoire 154 est réalisée dans un environnement sécurisé, par exemple en usine. Après le déchiffrement réalisé par l'unité 153, la clé de session déchiffrée est stockée dans un autre élément mémoire 128 dont la sortie est reliée au circuit de déchiffrement 136.

Préalablement à l'envoi des données chiffrées au dispositif d'affichage 100, le dispositif d'affichage 100 envoi au dispositif de chiffrement destiné à chiffrer les données numériques la clé publique correspondant à la clé privée mémorisée, et les données complémentaires de chiffrement correspondant aux caractéristiques de l'algorithme de chiffrement à utiliser pour que les données numériques chiffrées soient adaptées aux caractéristiques du dispositif d'affichage 100 (caractéristiques et organisation de la matrice 102, liste des numéros de série mémorisés dans les circuits de contrôle 114, etc.). Le dispositif de chiffrement choisit alors une clé de session, de préférence aléatoire, et chiffre les données en utilisant cette clé de session, éventuellement en décidant d'un vecteur d'initialisation aléatoire, et les autres informations de chiffrement reçues. Les données numériques chiffrées et les données complémentaires de déchiffrement (clé de session chiffrée avec la clé publique, vecteur d'initialisation, et éventuellement d'autres informations telles que par exemple la méthode de chiffrement utilisée si le dispositif d'affichage 100 est adapté pour fonctionner avec plusieurs méthodes de chiffrement) sont ensuite transmises au dispositif d'affichage 100 par exemple dans un fichier conteneur envoyé depuis le dispositif de chiffrement. Les informations de chiffrement peuvent être transmises au dispositif d'affichage 100 par l'intermédiaire d'un câble distinct ou non de celui utilisé pour la transmission des données chiffrées. Le dispositif d'affichage 100 déchiffre ensuite la clé de session, et l'utilise pour déchiffrer les données numériques chiffrées et les affiche.

Dans les deux modes de réalisation précédemment décrits, lors d'un affichage successif de plusieurs images, les données complémentaires de déchiffrement transmises au dispositif d'affichage 100 (clé de déchiffrement et/ou numéros de série et/ou vecteur d'initialisation) peuvent être identiques ou non pour toutes les images. Il est par exemple possible que le vecteur d'initialisation et/ou la clé de déchiffrement soient modifiés entre l'affichage de chaque image ou entre l'affichage de plusieurs groupes d'images.

Dans les deux modes de réalisation précédents, chaque image est chiffrée, envoyée au dispositif d'affichage 100, puis déchiffrée par le dispositif d'affichage 100 indépendamment des données précédemment déchiffrées et affichées par le dispositif d'affichage 100.

Dans un troisième mode de réalisation, il est possible que le chiffrage et le déchiffrage des données destinées à être affichées par chaque bloc d'affichage 106 soient réalisés en utilisant les parties des données des images précédentes affichées par ce bloc d'affichage 106.

Ainsi, les données numériques d'une image n destinées à un bloc d'affichage 106 peuvent être chiffrées en utilisant la clé de session (et éventuellement un vecteur d'initialisation et/ou un numéro de série) et également à partir des données numériques non chiffrées de ce bloc d'affichage 106 d'une image qui précède, immédiatement ou non, l'image n. Pour la première image à afficher, étant donné que les données numériques chiffrées de l'image précédente n'existent pas, on utilisera une valeur par défaut, par exemple « tout à zéro » à la place (initialisation mémoire à zéro du circuit mémoire 140 lorsqu'on charge une nouvelle clé).

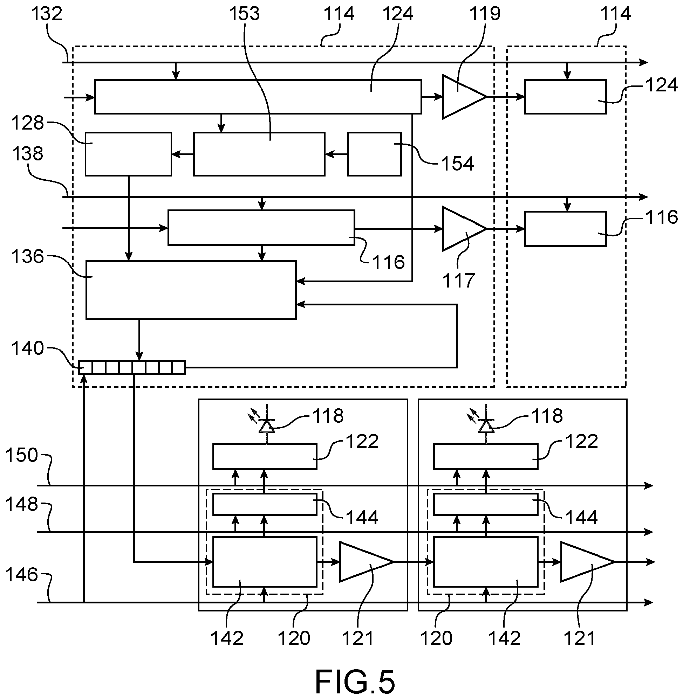

La figure 5 représente un circuit de contrôle 114 adapté pour réaliser un déchiffrement des données numériques chiffrées utilisant les données non chiffrées d'une image précédente.

En outre, par rapport aux circuits de contrôle 114 précédemment décrits en lien avec les figures 2 et 4, le circuit de déchiffrement 136 représenté sur la figure 5 reçoit en entrée des données numériques chiffrées de l'image n et des données numériques déchiffrées de l'image n-1 se trouvant dans le circuit mémoire 140, et le vecteur d'initialisation. Les données numériques chiffrées de l'image n et les données numériques déchiffrées de l'image n-1 sont par exemple combinées (par exemple en réalisant un XOR) par le circuit de déchiffrement 136. Les données numériques obtenues en sortie sont combinées à la clé de session pour obtenir les données numériques déchiffrées de l'image n.

En variante, il est envisageable que le chiffrement et le déchiffrement des données d'une image n fasse intervenir, en plus des données numériques déchiffrées de l'image n-1, les données numériques chiffrées de l'image n-2, voire les données numériques chiffrées et/ou déchiffrées d'une ou plusieurs autres images précédentes. Dans ce cas, le circuit de déchiffrement 136 peut garder en mémoire les données numériques chiffrées de la ou des images précédentes.

Selon une autre variante, il est possible de réaliser le chiffrement et le déchiffrement en utilisant les données numériques chiffrées d'une ou plusieurs des images précédentes, mais pas les données numériques non chiffrées de cette ou ces images précédentes.

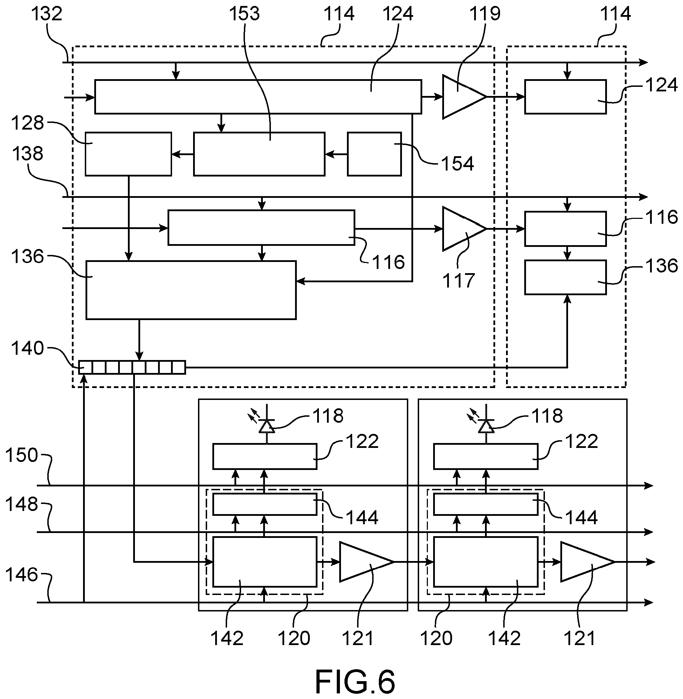

Dans une autre configuration, le chiffrement et le déchiffrement des données destinées à être déchiffrées dans chaque circuit de contrôle 114 peut être réalisé en utilisant, en tant que données supplémentaires de chiffrement et de déchiffrement, des données numériques destinées à être déchiffrées au sein d'un autre circuit de contrôle 114, par exemple voisin de celui-ci. La figure 6 représente une telle configuration, dans laquelle les données déchiffrées mémorisées dans le circuit mémoire 140 d'un premier circuit de contrôle 114 sont envoyées, via un amplificateur 123, en entrée du circuit de déchiffrement 136 d'un deuxième circuit de contrôle 114.

Selon un exemple de réalisation :
- le dispositif d'affichage 100 correspond à un écran de taille égale à 75 pouces (1,905 m de diagonale) et de résolution 4K (matrice 102 comprenant 3840 x 2160 pixels) ;
- chaque pixel est affiché par trois éléments lumineux 118 ;
- le pitch, ou pas (c'est-à-dire la distance entre les éléments lumineux affichant deux pixels voisins) est égal à 432 µm ;
- les données numériques comportent 10 bits par pixel ;
- la fréquence d'affichage du dispositif 100 est de 100 Hz ;

Le débit total des données numériques affichées dans le dispositif d'affichage 100 est dans ce cas de 25 Gbit/s.

Les blocs d'affichage 106 sont chacun configuré pour afficher un bloc de 8 x 8 pixels et sont agencés sous la forme de 270 rangées de 480 blocs 106. Chaque rangée reçoit dans ce cas un débit de données numériques égal à 92 Mbit/s.

Le dispositif d'affichage 100 comporte dans ce cas 129600 circuits de contrôle 114 chacun associé à un bloc d'affichage 106. Pour chaque, image, chaque bloc d'affichage 106 reçoit 1920 bits de données numériques chiffrées. Pour la première image chaque bloc 106 reçoit la même clé de déchiffrement, par exemple 256 bits, et éventuellement environ la même quantité de bits pour les données complémentaires (vecteur d'initialisation, identification de l'algorithme utilisé). L'algorithme de chiffrement/déchiffrement sera choisi de manière à traiter un bloc de 1920 bits. Si l'algorithme exige un nombre entier supérieur pour un bloc à traiter, les bits manquants pourront être mis à une valeur arbitraire, par exemple zéro. L'algorithme pourra aussi éventuellement traiter des blocs plus petits, en les traitant en séquence.

Dans tous les modes de réalisation, afin de faciliter le transport à travers des canaux de transmission normalement dévolus à des images, il est possible que les informations de chiffrement (clé de déchiffrement, vecteur d'initialisation) soient mélangées aux données numériques chiffrées lors de leur transmission au dispositif d'affichage 100, par exemple dans au moins une partie des bits des données numériques chiffrées destinées à certains blocs d'affichage 106. Ces blocs d'affichage 106 peuvent dans ce cas n'afficher aucune donnée numérique, ou bien afficher les données numériques de blocs d'affichage 106 voisins.

En variante, il est possible que la clé de déchiffrement, ou des données (par exemple un mot de passe) à partir desquelles la clé de déchiffrement est obtenue, soit entrée manuellement dans le dispositif 100.

Dans tous les modes de réalisation, il est possible que les données reçues par le dispositif 100 comportent au moins un bit indiquant si les données numériques reçues sont chiffrées ou non. Dans ce cas, le dispositif 100 réalise ou non un déchiffrement des données reçues en fonction de la valeur de ce ou ces bits. Pour limiter la quantité de données supplémentaires, on pourra, par exemple, ajouter un seul bit par bloc 106 pour indiquer si ce bloc particulier est chiffré ou non.

En outre, dans tous les modes de réalisation, il est possible que chaque circuit de déchiffrement 136 réalise ou non le déchiffrement en fonction de la valeur d'au moins un bit d'autorisation, ou d'un mot de passe codé sur n bits, reçu par le circuit de contrôle 114. Ce bit d'autorisation ou ce mot de passe, éventuellement lui-même chiffré pour augmenter le niveau de sécurité, peut être généré depuis le dispositif d'affichage 100, ou bien être reçu par le dispositif d'affichage 100 depuis l'extérieur. Par exemple, le déchiffrement peut être autorisé ou non en fonction du résultat d'une étape préalable d'authentification, par exemple en utilisant une carte à puce, un déclenchement d'interrupteurs, ou encore un capteur biométrique tel qu'un capteur d'empreinte digitale, sur le dispositif d'affichage 100. Le ou les circuits assurant la vérification de l'autorisation peuvent être intégrés aux circuits de contrôle 114, ou entre la carte vidéo 108 et les circuits de contrôle 114. L'utilisation d'un capteur biométrique assurera que seule la personne autorisée pourra déclencher l'affichage, et ainsi accéder à l'image secrète transmise sur le dispositif d'affichage 100.

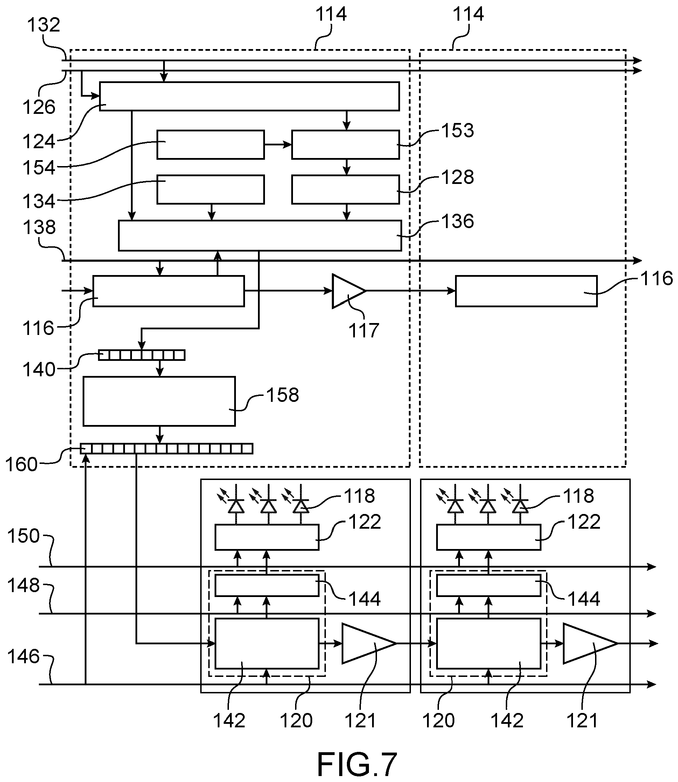

Il est possible que les données numériques chiffrées reçues par le dispositif d'affichage 100 aient été, préalablement au chiffrage, compressées. Un circuit de contrôle 114 selon un tel quatrième mode de réalisation est représenté sur la figure 7 et comporte un circuit de décompression 158 des données numériques déchiffrées et mémorisées dans le circuit mémoire 140. Les données numériques déchiffrées et décompressées sont ensuite mémorisées dans un autre circuit mémoire 160 depuis lequel les données sont envoyées ensuite aux circuits mémoires 120.

Sur l'exemple de la figure 7, le déchiffrement des données est réalisé avec les mêmes éléments que ceux du circuit de contrôle 114 précédemment décrit en lien avec la figure 4. Toutefois, étant donné que les données transmises au dispositif 100 et déchiffrées sont compressées, les capacités mémoires des différents éléments des circuits de contrôle 114 peuvent être inférieures à celles nécessaires pour le déchiffrement de données non compressées.

A titre d'exemple, la compression et la décompression des données peut être réalisée conformément au format JPEG. D'autres format de compression / décompression de données sont possibles. La taille des blocs pourra être choisie de manière à être bien adaptée à l'algorithme de décompression, par exemple des blocs de 8x8 pixels de 24 bits dans le cas du JPEG, ou des multiples entiers de cette taille. Si des données communes sont requises pour la décompression, elles devront être intégrées dans les données chiffrées afin de les rendre disponibles au moment de la décompression.

La compression ainsi réalisée permet de réduire les débits de données envoyées au dispositif 100 ainsi que le débit des données circulant dans le dispositif 100 et envoyées aux circuits de contrôle 114.

Ce quatrième mode de réalisation peut se combiner avec les modes de réalisation et variantes précédemment décrits : utilisation d'une clé de déchiffrement symétrique ou asymétrique, chiffrement des données d'une image utilisant ou non des données d'une autre image, chiffrement d'une partie des données d'une image en utilisant ou non d'autres données de la même image.

Dans ce quatrième mode de réalisation, il est possible que les données numériques déchiffrées à afficher soient propagées dans tous les circuits mémoires 120 du bloc d'affichage 106 qui sont reliés en parallèle. Un adressage des données numériques déchiffrées est dans ce cas réalisé pour que chaque circuit mémoire 120 identifie, via un circuit de décodage d'adresse, les données qui lui sont destinées. Une telle configuration peut être envisagée lorsque la quantité de données compressées destinées à chaque circuit de contrôle 114 est variable.

La figure 8 représente un circuit de contrôle 114 selon un cinquième mode de réalisation. Dans ce cinquième mode de réalisation, la compression et la décompression des données sont réalisées, par exemple, par un algorithme de type RLE (« Run-Length Encoding », ou codage par plages).

Contrairement aux précédents exemples de réalisation dans lesquels les données numériques chiffrées sont propagées dans les circuits de contrôle 114 par une liaison série de ces circuits, les données compressées et chiffrées sont propagées sur un bus de données 161 auquel tous les circuits de contrôle 114 sont reliés en parallèle. Dans cet exemple, le bus 161 comporte un fil sur lequel sont transmises les données numériques chiffrées et compressées, un fil sur lequel est transmis un signal d'horloge, et un fil sur lequel est transmis un signal de réinitialisation. Les données numériques envoyées sur le bus 161 sont adressées et chaque circuit de contrôle 114 comporte un circuit de décodage d'adresse 162 envoyant ensuite les données destinées à être reçues dans une mémoire 164.

Ces éléments différents par rapport aux précédents modes de réalisation sont utiles ici car l'algorithme de compression RLE compresse les données avec un taux de compression variable, ce qui résultera en des données chiffrées de taille variable. L'utilisation de l'adressage pour distribuer les données numériques chiffrées aux blocs d'affichage 106 permet d'avoir des données de tailles différentes pour les différents blocs d'affichage 106.

Cela est également valable pour n'importe quel algorithme de compression avec un taux de compression variable.

En outre, la mémoire 164 est ici de type FIFO (« First In First Out ») qui permet d'absorber les variations de débits liées aux variations de taux de compression.

Les éléments de déchiffrement et de décompression du circuit de contrôle 114 de la figure 8 sont similaires à ceux précédemment décrits en lien avec la figure 7.

La décompression des données est mise en œuvre après le déchiffrement de ces données. De plus, les données numériques sont compressées avant d'être chiffrées puis envoyées au dispositif d'affichage 100.

Selon une variante de la configuration représentée sur la figure 8, la mémoire 164 de type FIFO peut être couplée non pas entre le circuit de décodage d'adresse 162 et le circuit de déchiffrement 136, mais entre le circuit mémoire 140 et le circuit de décompression 158.

Ce cinquième mode de réalisation peut se combiner avec les modes de réalisation et variantes précédemment décrits : utilisation d'une clé de déchiffrement symétrique ou asymétrique, chiffrement des données d'une image utilisant ou non des données d'une autre image, chiffrement d'une partie des données d'une image en utilisant ou non d'autres données de la même image.

Dans tous les modes de réalisation, la carte vidéo 108 peut comporter une mémoire de type FIFO permettant d'absorber les variations de débit et/ou recevoir les données à afficher à l'avance.

Dans les configurations précédemment décrites, les données sont transmises sur des fils distincts de ceux utilisés pour l'alimentation électrique. En variante, il est possible que les données numériques soient transmises en étant modulées dans les signaux d'alimentation électrique. Dans ce cas, une étape supplémentaire de démodulation est mise en œuvre dans les pixels. Des détails de réalisation d'une telle variante sont expliqués dans le document EP 3 649 672 A1 et peuvent être appliqués par analogie dans la présente invention.

Outre les éléments dédiés à l'affichage des données numériques, le dispositif d'affichage 100 peut comporter des circuits de gestion des erreurs de transmission (code de parité, correction d'erreurs, bits de signalisation, etc.).

Dans tous les modes de réalisation et variantes, les circuits de contrôle 114 et/ou la carte vidéo 108 peuvent réaliser, en plus de l'envoi des données numériques à afficher et des signaux d'horloge à chaque groupe 104 et/ou bloc d'affichage 106, un ou plusieurs traitements numériques des données à afficher avant leur envoi aux groupes 104 et/ou blocs d'affichage 106. Ce ou ces traitements numériques des données peuvent correspondre par exemple à une correction de luminosité (qui se traduira par un ajustement de l'intensité des signaux analogiques envoyés dans les éléments lumineux), une correction de gamma (qui se traduira par une application de coefficients d'ajustement aux valeurs des signaux analogiques envoyées aux éléments lumineux en fonction d'une courbe de correction de couleur pour toute la matrice 102), ou une calibration des pixels (qui se traduira par une application de coefficients d'ajustement aux valeurs des signaux analogiques envoyées aux éléments lumineux en fonction des couleurs à corriger). En outre, un ou plusieurs de ces traitements numériques peuvent également être réalisés directement dans chaque pixel, en ajoutant dans ce cas un circuit de traitement numérique de données dans les pixels.

Dans différents exemples de réalisation décrits ci-dessus, la clé de déchiffrement utilisée correspond à une clé de session chiffrée avec une clé publique et qui est déchiffrée avec une clé privée, comme dans le deuxième mode de réalisation. En variante, d'autres types de distribution de clés peuvent s'appliquer.

Dans tous les modes de réalisation, il est possible qu'une partie seulement des données numériques à afficher soient chiffrées.

Dans tous les modes de réalisation, il est possible de réaliser une copie d'écran des données affichées en extrayant les données mémorisées dans les unités mémoires 140 (ou 160 lorsque les données sont compressées).

Dans tous les modes de réalisation, il est possible d'utiliser avantageusement le dispositif d'affichage 100 pour afficher une fenêtre de vérification de code dans laquelle l'utilisateur est amené à saisir un code confidentiel. Une telle utilisation est avantageuse en raison de la sécurité apportée par le dispositif d'affichage 100. Par exemple, lorsque le dispositif d'affichage 100 correspond à un écran d'ordinateur, l'ordinateur lui-même (CPU + GPU) ne connait pas la position des chiffres affichés par le dispositif d'affichage 100. Il est par exemple possible de demander à l'utilisateur d'entrer le code confidentiel et d'effectuer un test de Turing. Une configuration particulièrement avantageuse consistera à avoir un dispositif d'affichage 100 qui soit tactile car dans ce cas, il est possible de chiffrer la réponse délivrée après avoir rentré le code demandé.

En variante de tous les modes de réalisation et les exemples précédemment décrits ci-dessus, il est possible d'envisager d'autres modes de transmission des données : lumière, radio, etc.

## Revendications

1. Dispositif d'affichage (100) comportant au moins :
- une matrice (102) de blocs d'affichage (106), chaque bloc d'affichage (106) étant configuré pour afficher plusieurs pixels d'une image et comprenant plusieurs éléments lumineux (118) et au moins un circuit de pilotage (122) configuré pour générer des signaux de commande des éléments lumineux (118) du bloc d'affichage (106) à partir de données numériques destinées à être affichées par les éléments lumineux (118) du bloc d'affichage (106) ;
- une matrice de circuits de contrôle (114), chacun couplé et associé à au moins un bloc d'affichage (106) ;
- une carte vidéo (108) comprenant au moins une entrée (110) configurée pour recevoir un signal numérique chiffré à afficher par la matrice (102) de blocs d'affichage (106), et au moins une sortie (112) de données numériques couplée à la matrice (102) de circuits de contrôle (114) par un circuit de distribution de données, la carte vidéo (108) étant configurée pour décoder le signal numérique chiffré et envoyer aux circuits de contrôle (114) les données numériques chiffrées destinées à être affichées par les élément lumineux (118) qui sont issues du signal numérique reçu par la carte vidéo et encodées dans un format adapté à la matrice (102) de blocs d'affichage (106) ;
dans lequel chaque circuit de contrôle (114) comporte :
- un premier circuit mémoire (116, 162, 164) configuré pour recevoir et mémoriser les données numériques chiffrées correspondant aux données numériques destinées à être affichées par les éléments lumineux (118) du bloc d'affichage (106) associé ;
- un deuxième circuit mémoire (124) configuré pour mémoriser une clé de déchiffrement ;
- un circuit de déchiffrement (136) couplé aux premier et deuxième circuits mémoire (116, 162, 164, 124) et configuré pour réaliser une opération de déchiffrement des données numériques chiffrées en utilisant la clé de déchiffrement ;
et dans lequel l'opération de déchiffrement est mise en œuvre, dans le circuit de déchiffrement (136) de chaque circuit de contrôle (114), pour un groupe de bits relatif à l'affichage de pixels par le bloc d'affichage auquel ledit circuit de contrôle (114) est associé ;
le dispositif d'affichage (100) étant configuré pour émettre des caractéristiques de la matrice (102) de blocs d'affichage (106), des caractéristiques de chaque bloc d'affichage (106) et des données complémentaires de chiffrement à l'attention d'un dispositif de chiffrement (200), et pour recevoir le signal numérique chiffré accompagné éventuellement de données complémentaires de déchiffrement, chiffrées ou non ;
des données numériques chiffrées destinées à être affichées par les élément lumineux (118) et issues du signal numérique reçu étant chiffrées à partir desdites données complémentaires de chiffrement, et en utilisant lesdites caractéristiques de la matrice (102) de blocs d'affichage (106) ;
lesdites données complémentaires de déchiffrement le cas échéant étant générées de manière à être associées aux données complémentaires de chiffrement ;
le circuit de déchiffrement (136) étant configuré pour réaliser le déchiffrement des données numériques chiffrées, en utilisant éventuellement les données complémentaires de déchiffrement et éventuellement des données complémentaires caractéristiques de la matrice (102) de blocs d'affichage (106).

2. Dispositif d'affichage (100) selon la revendication 1, dans lequel chaque circuit de déchiffrement (136) est configuré pour recevoir en entrée des données complémentaires de déchiffrement, telles qu'un vecteur d'initialisation, destinées à être utilisées lors de l'opération de déchiffrement.

3. Dispositif d'affichage (100) selon l'une des revendications précédentes, dans lequel chaque circuit de contrôle (114) comporte un troisième circuit mémoire (134) configuré pour mémoriser un nombre binaire associé au circuit de contrôle (114), et dans lequel le circuit de déchiffrement (136) du circuit de contrôle (114) est configuré pour réaliser l'opération de déchiffrement en utilisant en outre le nombre binaire associé au circuit de contrôle (114).

4. Dispositif d'affichage (100) selon l'une des revendications précédentes, dans lequel le dispositif d'affichage (100) est configuré pour recevoir en entrée au moins une clé de session chiffrée et comporte en outre au moins une unité de déchiffrement (152) de la clé de session chiffrée, ladite unité de déchiffrement (152) étant configurée pour utiliser au moins une clé privée mémorisée dans l'unité de déchiffrement (152).

5. Dispositif d'affichage (100) selon la revendication 4, dans lequel chaque circuit de contrôle (114) comporte une unité de déchiffrement (152) de la clé de session chiffrée.

6. Dispositif d'affichage (100) selon l'une des revendications précédentes, dans lequel chaque circuit de déchiffrement (136) est configuré pour réaliser l'opération de déchiffrement en utilisant des données numériques précédemment déchiffrées par le circuit de déchiffrement (136) et/ou des données numériques chiffrées précédemment reçues par le circuit de contrôle (114) associé et/ou des données numériques précédemment déchiffrées par le circuit de déchiffrement d'au moins un autre circuit de contrôle (114).

7. Dispositif d'affichage (100) selon l'une des revendications précédentes, dans lequel chaque circuit de contrôle (114) comporte en outre un circuit de décompression (158) configuré pour réaliser, après la mise en œuvre de l'opération de déchiffrement, une opération de décompression des données numériques déchiffrées.

8. Dispositif d'affichage (100) selon l'une des revendications précédentes, comportant en outre au moins une mémoire (164) de type FIFO configurée pour former une mémoire de stockage tampon des données numériques chiffrées reçues avant la mise en œuvre de l'opération de déchiffrement.

9. Dispositif d'affichage (100) selon l'une des revendications précédentes, comportant au moins un bus de données (161) auquel chacun des circuits de contrôle (114) est couplé, et dans lequel le premier circuit mémoire (162, 164) de chaque circuit de contrôle (114) forme un circuit de réception de données configuré pour identifier les données numériques chiffrées destinées à être affichées par les éléments lumineux (118) du bloc d'affichage (106) associé au circuit de contrôle (114).

10. Dispositif d'affichage (100) selon l'une des revendications 1 à 8, dans lequel les premiers circuits mémoires (116) des circuits de contrôle (114) comportent des registres à décalage couplés en série d'un circuit de contrôle à l'autre.

11. Dispositif d'affichage (100) selon l'une des revendications précédentes, dans lequel chaque circuit de contrôle (114) est formé par une puce distincte du bloc d'affichage (106) associé, ou dans lequel chaque circuit de contrôle (114) est intégré dans le bloc d'affichage (106) associé.

12. Procédé de transmission sécurisée de données numériques entre un dispositif de chiffrement (200) et un dispositif d'affichage (100) selon l'une des revendications précédentes, comportant au moins les étapes de :
- envoi de caractéristiques de la matrice (102) de blocs d'affichage (106), de caractéristiques de chaque bloc d'affichage (106) et de données complémentaires de chiffrement depuis le dispositif d'affichage (100) au dispositif de chiffrement (200) ;
- chiffrement des données numériques à envoyer par le dispositif de chiffrement (200) à partir des données complémentaires de chiffrement, et en utilisant les caractéristiques de la matrice (102) de blocs d'affichage (106), et éventuellement une génération de données complémentaires de déchiffrement associées aux données complémentaires de chiffrement ;
- envoi des données numériques chiffrées au dispositif d'affichage (100), accompagnées éventuellement des données complémentaires de déchiffrement, chiffrées ou non ;
- déchiffrement, par le dispositif d'affichage (100), des données numériques chiffrées en utilisant éventuellement les données complémentaires de déchiffrement et éventuellement de données complémentaires caractéristiques de la matrice (102) de blocs d'affichage (106).

13. Procédé selon la revendication 12, comportant en outre :
- avant l'envoi des données numériques chiffrées au dispositif d'affichage (100), un envoi d'une clé publique, faisant partie des données complémentaires de chiffrement, depuis le dispositif d'affichage (100) au dispositif de chiffrement (200) ;
- un chiffrement d'une clé de session avec chiffrée avec la clé publique, la clé de session étant utilisée pour chiffrer les données numériques à envoyer, la clé de session chiffrée étant envoyée comme données complémentaires de déchiffrement depuis le dispositif de chiffrement (200) au dispositif d'affichage (100) ;
et dans lequel le déchiffrement est mis en œuvre avec la clé de session déchiffrée avec une clé privée mémorisée dans le dispositif d'affichage (100).

14. Procédé selon l'une des revendications 12 ou 13, comportant en outre :
- avant le chiffrement des données numériques, une compression des données numériques à envoyer au dispositif d'affichage (100) ;
- après le déchiffrement des données numériques, une décompression des données numériques déchiffrées.

## Patentansprüche

1. Anzeigevorrichtung (100), die mindestens aufweist:
- eine Matrix (102) von Anzeigeblöcken (106), wobei jeder Anzeigeblock (106) so konfiguriert ist, dass er mehrere Pixel eines Bildes anzeigt und mehrere Leuchtelemente (118) umfasst, und mindestens einen Steuerkreis (122), der so konfiguriert ist, dass er Steuersignale der Leuchtelemente (118) des Anzeigeblocks (106) aus digitalen Daten generiert, die zur Anzeige durch die Leuchtelemente (118) des Anzeigeblocks (106) bestimmt sind;
- eine Matrix von Steuerkreisen (114), die jeweils mit mindestens einem Anzeigeblock (106) gekoppelt und diesem zugeordnet sind;
- eine Videokarte (108), die mindestens einen Eingang (110) umfasst, der so konfiguriert ist, dass er ein verschlüsseltes, von der Matrix (102) von Anzeigeblöcken (106) anzuzeigendes digitales Signal empfängt, und mindestens einen Ausgang (112) digitaler Daten, der mit der Matrix (102) von Steuerkreisen (114) durch eine Datenverteilungskreis gekoppelt ist, wobei die Videokarte (108) so konfiguriert ist, dass sie das verschlüsselte digitale Signal decodiert und an die Steuerkreise (114) der verschlüsselten digitalen Daten sendet, die zur Anzeige durch die Leuchtelemente (118) bestimmt sind, die aus dem von der Videokarte empfangenen digitalen Signal stammen und in einem Format kodiert sind, das für die Matrix (102) von Anzeigeblöcken (106) geeignet ist;
wobei jeder Steuerkreis (114) aufweist:
- einen ersten Speicherkreis (116, 162, 164), der so konfiguriert ist, dass er die verschlüsselten digitalen Daten empfängt und speichert, die den digitalen Daten entsprechen, die zur Anzeige durch die Leuchtelemente (118) des zugeordneten Anzeigeblocks (106) bestimmt sind;
- einen zweiten Speicherkreis (124), der so konfiguriert ist, dass er einen Entschlüsselungsschlüssel speichert;
- einen Entschlüsselungskreis (136), der mit dem ersten und zweiten Speicherkreis (116, 162, 164, 124) gekoppelt und so konfiguriert ist, dass er einen Entschlüsselungsvorgang der verschlüsselten digitalen Daten unter Verwendung des Entschlüsselungsschlüssels durchführt;
und wobei der Entschlüsselungsvorgang in dem Entschlüsselungskreis (136) jedes Steuerkreises (114) für eine Bitgruppe durchgeführt wird, die sich auf die Anzeige von Pixeln durch den Anzeigeblock bezieht, dem der Steuerkreis (114) zugeordnet ist;
wobei die Anzeigevorrichtung (100) so konfiguriert ist, dass sie Merkmale der Matrix (102) von Anzeigeblöcken (106), Merkmale jedes Anzeigeblocks (106) und komplementäre Verschlüsselungsdaten an eine Verschlüsselungsvorrichtung (200) sendet und das verschlüsselte digitale Signal gegebenenfalls zusammen mit komplementären Entschlüsselungsdaten, verschlüsselt oder unverschlüsselt, empfängt;
wobei verschlüsselte digitale Daten, die zur Anzeige durch die Leuchtelemente (118) bestimmt sind und aus dem empfangenen digitalen Signal stammen, aus den komplementären Verschlüsselungsdaten verschlüsselt sind, und unter Verwendung der Merkmale der Matrix (102) von Anzeigeblöcken (106);
wobei die komplementären Entschlüsselungsdaten gegebenenfalls so generiert werden, dass sie den komplementären Verschlüsselungsdaten zugeordnet werden;
wobei der Entschlüsselungskreis (136) so konfiguriert ist, dass er das Entschlüsseln der verschlüsselten digitalen Daten gegebenenfalls unter Verwendung der komplementären Entschlüsselungsdaten und gegebenenfalls der komplementären Daten durchführt, die für die Matrix (102) von Anzeigeblöcken (106) charakteristisch sind.

2. Anzeigevorrichtung (100) nach Anspruch 1, wobei jeder Entschlüsselungskreis (136) so konfiguriert ist, dass er am Eingang komplementäre Entschlüsselungsdaten, wie einen Initialisierungsvektor, empfängt, die zur Verwendung während des Entschlüsselungsvorgangs bestimmt sind.

3. Anzeigevorrichtung (100) nach einem der vorhergehenden Ansprüche, wobei jeder Steuerkreis (114) einen dritten Speicherkreis (134) aufweist, der so konfiguriert ist, dass er eine dem Steuerkreis (114) zugeordnete Binärzahl speichert, und wobei der Entschlüsselungskreis (136) des Steuerkreises (114) so konfiguriert ist, dass er den Entschlüsselungsvorgang durchführt, indem er weiter die dem Steuerkreis (114) zugeordnete Binärzahl verwendet..

4. Anzeigevorrichtung (100) nach einem der vorhergehenden Ansprüche, wobei die Anzeigevorrichtung (100) so konfiguriert ist, dass sie am Eingang mindestens einen verschlüsselten Sitzungsschlüssel empfängt und weiter mindestens eine Entschlüsselungseinheit (152) des verschlüsselten Sitzungsschlüssels aufweist, wobei die Entschlüsselungseinheit (152) so konfiguriert ist, dass sie mindestens einen in der Entschlüsselungseinheit (152) gespeicherten privaten Schlüssel verwendet.

5. Anzeigevorrichtung (100) nach Anspruch 4, wobei jeder Steuerkreis (114) eine Entschlüsselungseinheit (152) des verschlüsselten Sitzungsschlüssels aufweist.

6. Anzeigevorrichtung (100) nach einem der vorhergehenden Ansprüche, wobei jeder Entschlüsselungskreis (136) so konfiguriert ist, dass er den Entschlüsselungsvorgang unter Verwendung der zuvor von dem Entschlüsselungskreis (136) entschlüsselten digitalen Daten und/oder der zuvor von dem zugeordneten Steuerkreis (114) empfangenen verschlüsselten digitalen Daten und/oder der zuvor von dem Entschlüsselungskreis mindestens eines anderen Steuerkreises (114) entschlüsselten digitalen Daten durchführt.

7. Anzeigevorrichtung (100) nach einem der vorhergehenden Ansprüche, wobei jeder Steuerkreis (114) weiter einen Dekompressionskreis (158) aufweist, der so konfiguriert ist, dass er nach der Durchführung des Entschlüsselungsvorgangs einen Dekompressionsvorgang der entschlüsselten digitalen Daten durchführt.

8. Anzeigevorrichtung (100) nach einem der vorhergehenden Ansprüche, die weiter mindestens einen FIFO-Speicher (164) aufweist, der so konfiguriert ist, dass er einen Pufferspeicher für die vor der Durchführung des Entschlüsselungsvorgangs empfangenen verschlüsselten digitalen Daten bildet.

9. Anzeigevorrichtung (100) nach einem der vorhergehenden Ansprüche, die mindestens einen Datenbus (161) aufweist, mit dem jeder der Steuerkreise (114) gekoppelt ist, und wobei der erste Speicherkreis (162, 164) jedes Steuerkreises (114) einen Datenempfangskreis bildet, der so konfiguriert ist, dass er die verschlüsselten digitalen Daten identifiziert, die zur Anzeige durch die Leuchtelemente (118) des dem Steuerkreis (114) zugeordneten Anzeigeblocks (106) bestimmt sind.

10. Anzeigevorrichtung (100) nach einem der Ansprüche 1 bis 8, wobei die ersten Speicherkreise (116) der Steuerkreise (114) Schieberegister aufweisen, die in Reihe von einem Steuerkreis zum anderen gekoppelt sind.

11. Anzeigevorrichtung (100) nach einem der vorhergehenden Ansprüche, wobei jeder Steuerkreis (114) durch einen separaten Chip des zugeordneten Anzeigeblocks (106) gebildet ist, oder wobei jeder Steuerkreis (114) in den zugeordneten Anzeigeblock (106) integriert ist.

12. Verfahren zur gesicherten Übertragung digitaler Daten zwischen einer Verschlüsselungsvorrichtung (200) und einer Anzeigevorrichtung (100) nach einem der vorhergehenden Ansprüche, das mindestens die Schritte aufweist:
- Senden von Merkmalen der Matrix (102) von Anzeigeblöcken (106), von Merkmalen jedes Anzeigeblocks (106) und von komplementären Verschlüsselungsdaten von der Anzeigevorrichtung (100) an die Verschlüsselungsvorrichtung (200);
- Verschlüsseln der von der Verschlüsselungsvorrichtung (200) aus den komplementären Verschlüsselungsdaten zu sendenden digitalen Daten und unter Verwendung der Merkmale der Matrix (102) von Anzeigeblöcken (106) und gegebenenfalls ein Generieren komplementärer Entschlüsselungsdaten, die den komplementären Verschlüsselungsdaten zugeordnet sind;
- Senden der verschlüsselten digitalen Daten an die Anzeigevorrichtung (100), gegebenenfalls zusammen mit komplementären Entschlüsselungsdaten, verschlüsselt oder unverschlüsselt;
- Entschlüsseln, durch die Anzeigevorrichtung (100), der verschlüsselten digitalen Daten gegebenenfalls unter Verwendung der komplementären Entschlüsselungsdaten und gegebenenfalls von komplementären Daten, die für die Matrix (102) von Anzeigeblöcken (106) charakteristisch sind.

13. Verfahren nach Anspruch 12, das weiter aufweist:
- vor dem Senden der verschlüsselten digitalen Daten an die Anzeigevorrichtung (100) ein Senden eines öffentlichen Schlüssels, der Teil der komplementären Verschlüsselungsdaten ist, von der Anzeigevorrichtung (100) an die Verschlüsselungsvorrichtung (200);
- ein Verschlüsseln eines Sitzungsschlüssels mit Verschlüsselung mit dem öffentlichen Schlüssel, wobei der Sitzungsschlüssel zur Verschlüsselung der zu sendenden digitalen Daten verwendet wird, wobei der verschlüsselte Sitzungsschlüssel als komplementäre Entschlüsselungsdaten von der Verschlüsselungsvorrichtung (200) an die Anzeigevorrichtung (100) gesendet wird;
und wobei die Entschlüsselung mit dem entschlüsselten Sitzungsschlüssel mit einem in der Anzeigevorrichtung (100) gespeicherten privaten Schlüssel durchgeführt wird.

14. Verfahren nach einem der Ansprüche 12 oder 13, das weiter aufweist:
- vor dem Verschlüsseln der digitalen Daten eine Komprimierung der an die Anzeigevorrichtung (100) zu sendenden digitalen Daten;
- nach dem Entschlüsseln der digitalen Daten eine Dekompression der entschlüsselten digitalen Daten.

## Claims

1. A display device (100) including at least:
- an array (102) of display blocks (106), each display block (106) being configured to display several pixels of an image and comprising several luminous elements (118) and at least one driving circuit (122) configured to generate control signals of the luminous elements (118) of the display block (106) from digital data intended to be displayed by the luminous elements (118) of the display block (106);
- an array of control circuits (114), each coupled to and associated with at least one display block (106);
- a video card (108) comprising at least one input (110) configured to receive an encrypted digital signal to be displayed by the array (102) of display blocks (106), and at least one digital data output (112) coupled to the array (102) of control circuits (114) by a data distribution circuit, the video card (108) being configured to decode the encrypted digital signal and send, to the control circuits (114), the encrypted digital data intended to be displayed by the luminous elements (118) which are derived from the digital signal received by the video card and encoded in a format adapted to the array (102) of display blocks (106);
and wherein each control circuit (114) includes:
- a first memory circuit (116, 162, 164) configured to receive and store the encrypted digital data corresponding to the digital data intended to be displayed by the luminous elements (118) of the associated display block (106);
- a second memory circuit (124) configured to store a decryption key;
- a decryption circuit (136) coupled to the first and second memory circuits (116, 162, 164, 124) and configured to perform a decryption operation on the encrypted digital data using the decryption key;
and wherein the decryption operation is implemented, in the decryption circuit (136) of each control circuit (114), for a group of bits relating to the display of pixels by the display block with which said control circuit (114) is associated;
the display device (100) being configured to emit characteristics of the array (102) of display blocks (106), characteristics of each display block (106) and additional encryption data to an encryption device (200), and to receive the encrypted digital signal possibly accompanied by additional decryption data, encrypted or not;
encrypted digital data intended to be displayed by the luminous elements (118) and derived from the received digital signal being encrypted from said additional encryption data, and using said characteristics of the array (102) of display blocks (106);
said additional decryption data, where applicable, being generated so as to be associated with the additional encryption data;
the decryption circuit (136) being configured to perform the decryption of the encrypted digital data, possibly using the additional decryption data and possibly additional data characteristic of the array (102) of display blocks (106).

2. The display device (100) according to one of the preceding claims, wherein each decryption circuit (136) is configured to receive as an input additional decryption data, such as an initialisation vector, for use in the decryption operation.

3. The display device (100) according to one of the preceding claims, wherein each control circuit (114) includes a third memory circuit (134) configured to store a binary number associated with the control circuit (114), and wherein the decryption circuit (136) of the control circuit (114) is configured to perform the decryption operation further using the binary number associated with the control circuit (114).

4. The display device (100) according to one of the preceding claims, wherein the display device (100) is configured to receive as an input at least one encrypted session key and further includes at least one decryption unit (152) for the encrypted session key configured to use at least one private key stored in the decryption unit (152).

5. The display device (100) according to claim 4, wherein each control circuit (114) comprises a decryption unit (152) for the encrypted session key.

6. The display device (100) according to one of the preceding claims, wherein each decryption circuit (136) is configured to perform the decryption operation using digital data previously decrypted by the decryption circuit (136) and/or encrypted digital data previously received by the associated control circuit (114) and/or digital data previously decrypted by the decryption circuit of at least one other control circuit (114).

7. The display device (100) according to one of the preceding claims, wherein each control circuit (114) further includes a decompression circuit (158) configured to perform a decompression operation on the decrypted digital data after the implementation of the decryption operation.

8. The display device (100) according to one of the preceding claims, further including at least one FIFO type memory (164) configured to form a buffer storage memory for the encrypted digital data received before the implementation of the decryption operation.

9. The display device (100) according to one of the preceding claims, including at least one data bus (161) to which each of the control circuits (114) is coupled, and in which the first memory circuit (162, 164) of each control circuit (114) forms a data reception circuit configured to identify the encrypted digital data intended to be displayed by the luminous elements (118) of the display block (106) associated with the control circuit (114).

10. The display device (100) according to one of claims 1 to 8, wherein the first memory circuits (116) of the control circuits (114) include shift registers serially coupled from one control circuit to another.

11. The display device (100) according to one of the preceding claims, wherein each control circuit (114) is formed by a chip distinct from the associated display block (106), or wherein each control circuit (114) is integrated into the associated display block (106).

12. A method for securely transmitting digital data between an encryption device (200) and a display device (100) according to one of the preceding claims, including at least the steps of:
- sending characteristics of the array (102) of display blocks (106), characteristics of each display block (106) and additional encryption data from the display device (100) to the encryption device (200);
- encrypting the digital data to be sent by the encryption device (200) from the additional encryption data, and using the characteristics of the array (102) of display blocks (106), and possibly generating additional decryption data associated with the additional encryption data;
- sending the encrypted digital data to the display device (100), possibly accompanied by the additional decryption data, encrypted or not;
- decrypting, by the display device (100), the encrypted digital data, possibly using the additional decryption data and possibly additional data characteristic of the array (102) of display blocks (106).

13. The method according to claim 12, further including:
- before sending the encrypted digital data to the display device (100), sending a public key, being part of the additional encryption data, from the display device (100) to the encryption device (200);
- encrypting a session key encrypted with the public key, the session key being used to encrypt the digital data to be sent, the encrypted session key being sent as additional decryption data from the encryption device (200) to the display device (100);
and wherein the decryption is implemented with the session key decrypted with a private key stored in the display device (100).

14. The method according to one of claims 12 or 13, further including:
- before encrypting the digital data, compressing the digital data to be sent to the display device (100);
- after decrypting the digital data, decompressing the decrypted digital data.
